(19) Europäisches Patentamt
European Patent Office
Office européen des brevets

(11) **EP 3 093 361 B1**

(12) **EUROPEAN PATENT SPECIFICATION**

(45) Date of publication and mention
of the grant of the patent:
**17.07.2019 Bulletin 2019/29**

(21) Application number: **15735570.2**

(22) Date of filing: **09.01.2015**

(51) Int Cl.:
*C21D 1/32* (2006.01)         *C21D 9/36* (2006.01)
*C21D 9/38* (2006.01)         *C21D 9/40* (2006.01)
*C22C 38/02* (2006.01)        *C22C 38/04* (2006.01)
*C22C 38/06* (2006.01)        *C22C 38/18* (2006.01)
*C22C 38/32* (2006.01)        *F16C 33/62* (2006.01)
*B22D 23/00* (2006.01)        *C22C 38/20* (2006.01)
*C22C 38/22* (2006.01)        *C22C 38/00* (2006.01)
*C22C 38/40* (2006.01)        *C22C 38/44* (2006.01)
*C21D 1/18* (2006.01)         *C21D 8/06* (2006.01)
*F16C 33/30* (2006.01)        *F16C 33/64* (2006.01)

(86) International application number:
**PCT/JP2015/050528**

(87) International publication number:
**WO 2015/105186 (16.07.2015 Gazette 2015/28)**

(54) **BEARING PART, STEEL FOR BEARING PART AND METHOD FOR PRODUCING THEREOF**

LAGERTEIL, STAHL FÜR LAGERTEIL UND HERSTELLUNGSVERFAHREN DAFÜR

PIÈCE DE PALIER, ACIER POUR PIÈCE DE PALIER, ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.01.2014 JP 2014003338
16.04.2014 JP 2014084952**

(43) Date of publication of application:
**16.11.2016 Bulletin 2016/46**

(73) Proprietor: **Nippon Steel Corporation
Tokyo (JP)**

(72) Inventors:
• **SAKAMOTO Masashi
Tokyo 100-8071 (JP)**
• **KODAMA Junichi
Tokyo 100-8071 (JP)**
• **NEISHI Yutaka
Tokyo 100-8071 (JP)**

(74) Representative: **Vossius & Partner
Patentanwälte Rechtsanwälte mbB
Siebertstrasse 3
81675 München (DE)**

(56) References cited:
WO-A1-2013/108828    WO-A1-2013/108828
JP-A- 2001 294 972   JP-A- 2003 129 176
JP-A- 2003 129 176   JP-A- 2004 100 016
JP-A- 2007 224 410   JP-A- 2007 224 410
JP-A- 2009 242 920

**Description**

[Technical Field of the Invention]

The present invention relates to a bearing part such as needle bearings, roller bearings and ball bearings, steel for a bearing part which is a material for the bearing part, and a method for producing thereof.

Priority is claimed on Japanese Patent Application No. 2014-3338, filed on January 10, 2014, and Japanese Patent Application No. 2014-84952, filed on April 16, 2014.

[Related Art]

Bearing parts such as needle bearings, roller bearings and ball bearings are continually used under a situation where a foreign material such as burr or abrasion powder is mixed into lubricating oil, that is, are continually used even in contaminated environments. Therefore, it is important to improve rolling contact fatigue life of a bearing part in contaminated environments. In order to improve the rolling contact fatigue life of the bearing part in contaminated environments, it is known that an increase in retained austenite is effective. Accordingly, steel for the bearing part is subjected to a surface treatment such as a carburizing or nitriding.

However, there are some problems that not only a surface treatment such as carburizing or nitriding for the steel for the bearing parts is high cost, but also a variation in qualities of a bearing part occurs due to the influence of variations in the treatment atmosphere. For example, Patent Document 1 discloses a bearing part including large amount of retained austenite manufactured by quenching and tempering and without carburizing or a nitriding.

A bearing part disclosed in the Patent Document 1 secures the amount of retained austenite by lowering the martensite start temperature (Ms point) by including C, Mn and Ni, or Mo into the steel. However, when a content of Mn, which is added to the steel, is increased in order to secure the amount of retained austenite, the hardenability of the steel is raised. As a result, a supercooled structure such as martensite is generated during cooling after hot rolling, and the workability, ductility and toughness of hot rolled wire rod is deteriorated.

In addition, the Patent Document 2 discloses a method of generating retained austenite while suppressing grain coarsening by using spherical cementite. However, in the method disclosed in Patent Document 2, spheroidizing at high temperature is performed for long period of time. As a result, C is solid-soluted into an austenite phase and the number density of spherical cementite is insufficient. Furthermore, the grain size of austenite is coarsened and an improvement effect of rolling contact fatigue life cannot be obtained sufficiently.

Since the treatment time of spheroidizing annealing is long, when the number of times of the annealing is increased, it is known that production efficiency is deteriorated by increasing a manufacturing cost. To solve this problem, for example, the Patent Document 3 discloses a high-carbon steel rolled wire rod for bearing parts that was invented by some of the present inventors and the high-carbon steel rolled wire rod for bearing parts is capable of wire drawing without spheroidizing annealing.

In addition, conventionally, spheroidizing annealing is performed before or after the wire drawing. Among the spheroidizing annealing, Patent Document 4 discloses a method in which the rolled wire rod is subjected to the wire drawing after the hot rolling is completed and the spheroidizing annealing is performed so that the spheroidizing annealing before the wire drawing can be omitted.

However, the method disclosed in the Patent Document 4 is not intended to shorten the treatment time of the spheroidizing annealing.

[Prior Art Document]

[Patent Document]

[Patent Document 1] Japanese Unexamined Patent Application, First Publication No. 2004-124215
[Patent Document 2] Japanese Unexamined Patent Application, First Publication No. 2007-077432
[Patent Document 3] PCT International Publication WO 2013/108828
[Patent Document 4] Japanese Unexamined Patent Application, First Publication No. 2004-100016

[Disclosure of the Invention]

[Problems to be Solved by the Invention]

However, as in Patent Document 1, when the content of Mn in the steel is increased, it is difficult to process the hot rolled wire rod by omitting spheroidizing annealing, and it is necessary to perform spheroidizing several times so as to obtain the bearing part for the foregoing reasons. In addition, the present inventors found that it is necessary to control the microstructure through the use of wire drawing and quenching where the quenching temperature is controlled, in order to manufacture a bearing part having an excellent rolling contact fatigue life in contaminated environments using the material disclosed in Patent Document 3.

The present invention has been made in view of such circumstances, and the aim of the present invention is to provide a bearing part having an excellent rolling contact fatigue life in environment including contaminated environments, steel for a bearing part which is a material for the bearing part, and a method for manufacturing them, in which the number of spheroidizing annealing is only one and which takes a short amount of time.

[Means for Solving the Problem]

The present inventors found that the average grain size of prior-austenite of a bearing part can be refined by subjecting steel including Cr in which the metallographic structure consists of pearlite to spheroidizing annealing at a lower temperature than usual after wire drawing. Furthermore, the present inventors found that the amount of retained austenite can be secured by refining the average grain size of the prior-austenite. Then, the present inventors found that the rolling contact fatigue life of the bearing part can be improved not only under normal conditions, but also in contaminated environments by securing the amount of retained austenite.

The summary of the present invention is as follows.

(1) A bearing part according to one aspect of the present invention includes, as a chemical composition, by mass%: C: 0.95% to 1.10%; Si: 0.10% to 0.70%; Mn: 0.20% to 1.20%; Cr: 0.90% to 1.60%; Al: 0.010% to 0.100%; N:0.003% to 0.030%; P: 0.025% or less; S: 0.025% or less; O: 0.0010% or less; optionally one or more of the group consisting of: Mo: 0.25% or less, B: 0.0050% or less, Cu: 1.0% or less, Ni: 3.0% or less, and Ca: 0.0015% or less; and a remainder including Fe and impurities; a metallographic structure consists of a retained austenite, a spherical cementite and a martensite; an amount of the retained austenite is 18% to 25%, by volume%; an average grain size of a prior-austenite is 6.0 $\mu$m or less; an average grain size of the spherical cementite is 0.45 $\mu$m or less; and a number density of the spherical cementite is 0.45 $\times$ 10$^6$ mm$^{-2}$ or more in the metallographic structure.

(2) The bearing part according to (1) may include, as the chemical composition, by mass%, one or more of Mo: 0.01% to 0.25%, B: 0.0001% to 0.0050%, Cu: 0.1% to 1.0%, Ni: 0.05% to 3.0%, and Ca: 0.0003% to 0.0015%.

(3) A steel for a bearing part according to one aspect of the present invention includes, as a chemical composition, by mass%: C: 0.95% to 1.10%; Si: 0.10% to 0.70%; Mn: 0.20% to 1.20%; Cr: 0.90% to 1.60%; Al: 0.010% to 0.100%; N:0.003% to 0.030%; S: 0.025% or less; P: 0.025% or less; O: 0.0010% or less; and optionally one or more of the group consisting of; Mo: 0.25% or less, B: 0.0050% or less, Cu: 1.0% or less, Ni: 3.0% or less, and Ca: 0.0015% or less; and a remainder including Fe an impurities; a metallographic structure consists of a spherical cementite and a ferrite; a number density of the spherical cementite having a grain size of 0.5 $\mu$m to 3.0 $\mu$m is 2.0 $\times$ 10$^6$ mm$^{-2}$ or more in the metallographic structure.

(4) The steel for the bearing part according to (3) may include, as the chemical composition, by mass%, one or more of Mo: 0.01% to 0.25%, B: 0.0001% to 0.0050%, Cu: 0.1% to 1.0%, Ni: 0.05% to 3.0%, and Ca: 0.0003% to 0.0015%.

(5) A method for producing a steel for a bearing part according to (3) according to one aspect of the present invention includes: a casting process for obtaining a steel piece having a chemical composition according to (3) or (4); a heating process of heating the steel piece to 900°C to 1300°C; a hot rolling process for obtaining a hot rolled wire rod by subjecting the steel piece to hot rolling at a finish rolling temperature of 850°C or less after the heating process; a winding process of winding the hot rolled wire rod after the hot rolling process at a winding temperature of 800°C or less; a cooling process for making a microstructure of the hot rolled wire rod a pearlite by cooling the hot rolled wire rod to 600°C at a cooling rate of 3.0 °C/second or less after the winding process; a wire drawing process of subjecting the hot rolled wire rod to wire drawing in which a total reduction of an area is 50% or more after the cooling process; and a spheroidizing annealing process for obtaining the steel for the bearing part by performing spheroidizing annealing in which the hot rolled wire rod after the wire drawing process is held at a temperature of 650°C to the lower of 750°C and A$_1$-5°C for 0.5 hours to 5 hours; wherein, A$_1$ represents a temperature at which A$_1$ transformation starts, and is a predicted value which is calculated by a following equation 1 based on the chemical composition, and, [C], [Si], [Mn], [Cu], [Ni], [Cr], [Mo], [Al] and [B] in the equation 1 represent, by mass%, the content of C, the content of Si, the content of Mn, the content of Cu, the content of Ni, the content of Cr, the content of Mo, the content of Al and the content of B, respectively, in the hot rolled wire rod.

$$A_1=750.8-26.6\times[C]+17.6\times[Si]-11.6\times[Mn]-22.9\times[Cu]-23.0\times[Ni]+24.1\times[Cr]+22.5\times[Mo]-169.4\times[Al]-894.7\times[B] \quad \text{(Equation 1)}$$

(6) A method for producing a bearing part according to (1) according to one aspect of the present invention includes: a casting process for obtaining a steel piece having a chemical composition according to (1) or (2); a heating process of heating the steel piece to 900°C to 1300°C; a hot rolling process for obtaining a hot rolled wire rod by subjecting the steel piece to hot rolling at a finish rolling temperature of 850°C or less after the heating process; a winding process of winding the hot rolled wire rod after the hot rolling process at a winding temperature of 800°C or less; a cooling process for making a microstructure of the hot rolled wire rod a pearlite by cooling the hot rolled wire rod to 600°C at a cooling rate of 3.0 °C/second or less after the winding process; a wire drawing process of subjecting the hot rolled wire rod to wire drawing in which a total reduction of an area is 50% or more after the cooling process; a spheroidizing annealing process for obtaining a steel for a bearing part by performing spheroidizing annealing in which the hot rolled wire rod after the wire drawing process is held at a temperature of 650°C to the lower of 750°C and $A_1$-5°C for 0.5 hours to 5 hours; a forming process of rough forming the steel for the bearing part after the spheroidizing annealing process; a quenching process of performing quenching by heating the steel for the bearing part after the forming process to 800°C to 890°C; a tempering process of subjecting the steel for the bearing part to tempering at 250°C or less after the quenching process; and a finish machining process for obtaining the bearing part by subjecting the steel for the bearing part to finish machining after the tempering process; wherein, $A_1$ represents a temperature at which $A_1$ transformation starts, and is a predicted value which is calculated by a following equation 2 based on the chemical composition; and, [C], [Si], [Mn], [Cu], [Ni], [Cr], [Mo], [Al] and [B] in the equation 2 represent, by mass%, the content of C, the content of Si, the content of Mn, the content of Cu, the content of Ni, the content of Cr, the content of Mo, the content of Al and the content of B, respectively, in the hot rolled wire rod.

$$A_1=750.8-26.6\times[C]+17.6\times[Si]-11.6\times[Mn]-22.9\times[Cu]-23.0\times[Ni]+24.1\times[Cr]+22.5\times[Mo]-169.4\times[Al]-894.7\times[B] \quad \text{(Equation 2)}$$

[Effects of the Invention]

According to the above aspects of the present invention, a bearing part having an excellent rolling contact fatigue life can be obtained by controlling the average grain size of prior-austenite, the amount of retained austenite and the number density of spherical cementite and by performing spheroidizing annealing for a short amount of time and once, not only under the normal conditions, but also in contaminated environments, without performing carburizing, nitriding and spheroidizing annealing for a long period of time. Furthermore, steel for a bearing part which is a material for a bearing part can be obtained by controlling the metallographic structure. In addition, according to the above aspects of the present invention, manufacture thereof is possible. Therefore, when the bearing parts according to the above aspects are applied to a vehicle or industrial machinery, it is possible to extend the life of the machine and reduce the manufacturing cost. That is, contribution of the present invention to the industry is extremely significant.

[Brief Description of the Drawings]

FIG. 1 is a view showing a metallographic structure of a bearing part.
FIG. 2 is a view showing a metallographic structure of steel for a bearing part.
FIG. 3 is a view showing a relationship between the number density of spherical cementite in steel for a bearing part and the average grain size of prior-austenite of a bearing part.
FIG. 4 is a view showing a relationship between the average grain size of prior-austenite and the amount of retained austenite of a bearing part.
FIG. 5 is a view showing a relationship between the amount of retained austenite and the rolling contact fatigue life of a bearing part in a contaminated environment.
FIG. 6 is a view showing a relationship between the number density of spherical cementite in a bearing part and the rolling contact fatigue life of a bearing part.

[Embodiments of the Invention]

Increasing the amount of retained austenite, controlling the size of spherical cementite and controlling the number density of spherical cementite are effective for improving the rolling contact fatigue life in contaminated environments. The present inventors investigated the appropriate amount of retained austenite and the manufacturing conditions for controlling the amount of retained austenite and found the following. The amount of retained austenite (volume%) can be determined by, for example, calculating the ratio of the diffraction intensity of retained austenite $\gamma$ (220) to the diffraction intensity of martensite $\alpha$ (211) measured by X-ray diffraction. The amount of retained austenite (the amount of V$\gamma$) can be determined by, for example, obtaining the X-ray diffraction peaks of the microstructures of the steel sheet using an X-ray diffraction measuring apparatus (RAD-RU300 made by Rigaku Denki), in which a Co target is used and the target output is set to 40 kV - 200 mA, and calculating the theoretical intensity ratio by Rietveld analyses.

Along with increasing the amount of retained austenite, the rolling contact fatigue life can be improved even in contaminated environments. In order to stably obtain this effect, the essential amount of retained austenite is 18% or more, by volume%. On the other hand, when the amount of retained austenite is more than 25% by volume%, the hardness is reduced, the normal rolling contact fatigue strength of the bearing part is reduced, and aging of dimensions become larger. As a result, the functional usage of the bearing part is reduced. Therefore, in order to improve the rolling contact fatigue life of the bearing part in contaminated environments, it is necessary to control the amount of retained austenite to be 18% to 25%, by volume%.

During quenching, it is necessary to stabilize the austenite phase in order to increase the amount of retained austenite. In addition, lowering the martensite start temperature (Ms point) is an effective way of doing so. The Ms point is affected by solid-soluted amount of the elements such as C, Si and Mn in the austenite phase, particularly, is greatly affected by an amount of solid-soluted C in the austenite phase. However, when the heating temperature during the quenching is increased in order to increase the amount of solid-soluted C, the average grain size of prior-austenite coarsens. Furthermore, the amount of solid-soluted C in martensite is increased after the quenching. Therefore, the rolling contact fatigue life and the toughness of the bearing part are reduced.

Then, the present inventors focused their investigation on stabilization of the austenite phase due to grain refinement. As a result, the present inventors found the following.

Firstly, processing strain is introduced by wire drawing a hot rolled wire rod having pearlite structure (pearlite steel). Next, the hot rolled wire rod is subjected to spheroidizing annealing at a lower than conventional temperature after the wire drawing. It was found that spherical cementite can be finely dispersed due to this spheroidizing annealing. Then, it was found that when the spherical cementite is finely dispersed, the average grain size of prior-austenite after quenching of steel for a bearing part, which had been subjected to the spheroidizing annealing, can be refined.

In addition, the present inventors found that the amount of retained austenite can be controlled to 18% to 25% by setting the average grain size of the prior-austenite of the bearing part to 6.0 $\mu$m or less.

In order to reduce the average grain size of the prior-austenite, it is preferable to control the total reduction of area during the wire drawing and the heating temperature of the spheroidizing annealing. In addition, after the spherical cementite is finely precipitated due to these controls, it is preferable to perform the quenching. Specifically, after the the hot rolled wire rod (pearlite steel) is subjected to wire drawing with a total reduction of area of 50% or more, the spheroidizing annealing is performed at a temperature of 650°C to the lower of 750°C and A$_1$-5°C. Then, the hot rolled wire rod is cooled to 400°C or less at a cooling rate of 0.1 °C/s or more. Next, the hot rolled wire rod is heated to 800°C to 890°C, and the quenching is performed. As a result, the average grain size of the prior-austenite can be suppressed to 6.0 $\mu$m or less and the amount of retained austenite can be controlled to be 18% to 25%.

In addition, the average grain size of the prior-austenite can be obtained by the following method. Firstly, in the center of a longitudinal direction of a bearing part, a C cross section perpendicular to the longitudinal direction is polished and corroded, and thus, a grain boundary of the prior-austenite appears. Secondary, a range within a radius of 3mm from a center of the C cross section is set as the center portion, and photographs are taken of the center portion using an optical microscope at 400 times magnification. Then, the captured images are measured by a counting method defined in JIS G 0551. In addition, four visual fields are measured in each sample, and the average value of grain sizes of the prior-austenite in the obtained four visual fields is set as the average grain size of the prior-austenite.

When the total reduction of area during the wire drawing is less than 50%, the spherical cementite is not sufficiently spheroidized during the spheroidizing annealing, and the number density of spherical cementite having a grain size of 0.50 $\mu$m to 3.0 $\mu$m in the metallographic structure of the steel for the bearing part is decreased. As a result, the average grain size of the prior-austenite of the bearing part after the quenching is increased, and there are cases where the average grain size of prior-austenite is more than 6.0 $\mu$m.

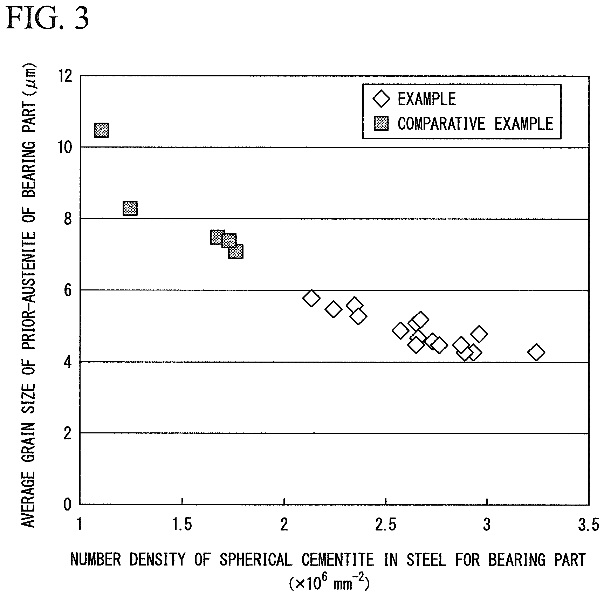

FIG. 3 shows a relationship between the number density of spherical cementite having a grain size of 0.50 $\mu$m to 3.00 $\mu$m in steel for a bearing part after spheroidizing annealing and the average grain size of prior-austenite of a bearing part which is obtained through subsequent quenching and tempering.

As shown in FIG. 3, when the number density of spherical cementite (grain size is 0.5 $\mu$m to 3.0 $\mu$m) in the

steel for the bearing part was $2.0 \times 10^6$ mm$^{-2}$ or more, the average grain size of prior-austenite of a bearing part after quenching and tempering is refined to be 6.0 $\mu$m or less. In this way, there is a correlation between the amount of spherical cementite having a prescribed size in the steel for the bearing part and the average grain size of prior-austenite of the bearing part.

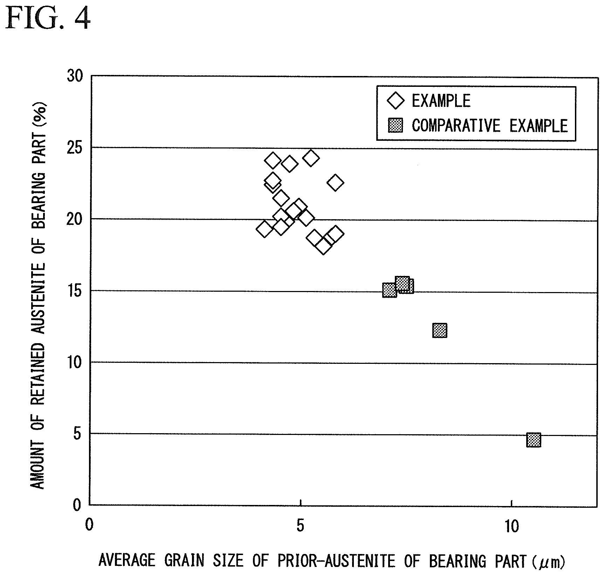

In addition, FIG. 4 shows the relationship between the average grain size of prior-austenite of a bearing part and the amount of retained austenite of a bearing part. As shown in FIG. 4, when the average grain size of the prior-austenite of the bearing part is 6.0 $\mu$m or less, the amount of retained austenite of the bearing part is 18% or more, by volume%. On the other hand, when the average grain size of the prior-austenite of the bearing part is more than 6.0 $\mu$m, the amount of retained austenite of the bearing part is reduced to less than 18%, by volume%.

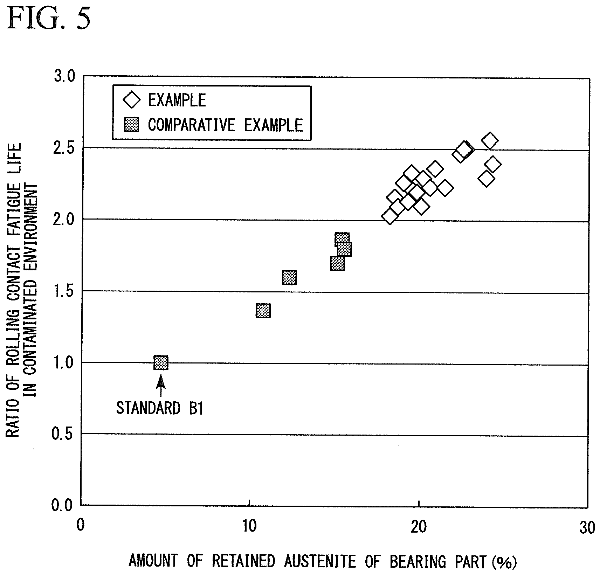

FIG. 5 shows the relationship between the amount of retained austenite in a bearing part and the rolling contact fatigue life of a bearing part in a contaminated environment. As shown in FIG. 5, when the amount of retained austenite in the bearing part is 18% or more, by volume%, the rolling contact fatigue life of the bearing part in a contaminated environment is good. On the other hand, when the amount of retained austenite in the bearing part is less than 18%, by volume%, the rolling contact fatigue life of the bearing part in a contaminated environment is reduced.

Next, the present inventors investigated the method for increasing the number density of spherical cementite having an average grain size of 0.45 $\mu$m or less in the bearing part after the quenching.

When spherical cementite, which is fine and hard, is dispersed in the steel, the spherical cementite contributes to strengthening of the bearing part. Therefore, when the number density of spherical cementite having the prescribed size is increased, the rolling contact fatigue life or an impact property of the bearing part is improved. In their investigations, the present inventors found that it is important that the average grain size of spherical cementite of the bearing part be set to 0.45 $\mu$m or less and the number density of spherical cementite be set to $0.45 \times 10^6$ mm$^{-2}$ or more. When the number density of spherical cementite is less than $0.45 \times 10^6$ mm$^{-2}$, the rolling contact fatigue life of the bearing part is decreased. The number density of spherical cementite is preferably $0.5 \times 10^6$ mm$^{-2}$ or more.

In addition, when the average grain size of the spherical cementite of the bearing part is more than 0.45 $\mu$m, generation and extension of fatigue crack is promoted. Therefore, it is necessary that the average grain size of spherical cementite of the bearing part is 0.45 $\mu$m or less. On the other hand, in normal operating conditions, it is difficult to reduce the average grain size of spherical cementite to less than 0.10 $\mu$m.

Since the spherical cementite is conventionally solid-soluted into an austenite phase which is a base metal, when the steel is heated to $A_1$ point or more during quenching, the number density of spherical cementite of the bearing part is lowered than the number density of spherical cementite in the steel for the bearing part which is a material for the bearing part. When the heating temperature of the quenching is set to a lower temperature, the number density of spherical cementite in the bearing part is increased; however, the amount of retained austenite in the bearing part is reduced. Therefore, the rolling contact fatigue life of the bearing part in the contaminated environment is reduced.

However, the present inventors found that when the number density of spherical cementite having a grain size of 0.5 $\mu$m to 3.0 $\mu$m in steel for a bearing part before quenching is increased to $2.0 \times 10^6$ mm$^{-2}$ or more, the number density of spherical cementite having an average grain size of 0.45 $\mu$m or less can be secured for $0.45 \times 10^6$ mm$^{-2}$ or more in a bearing part after the quenching.

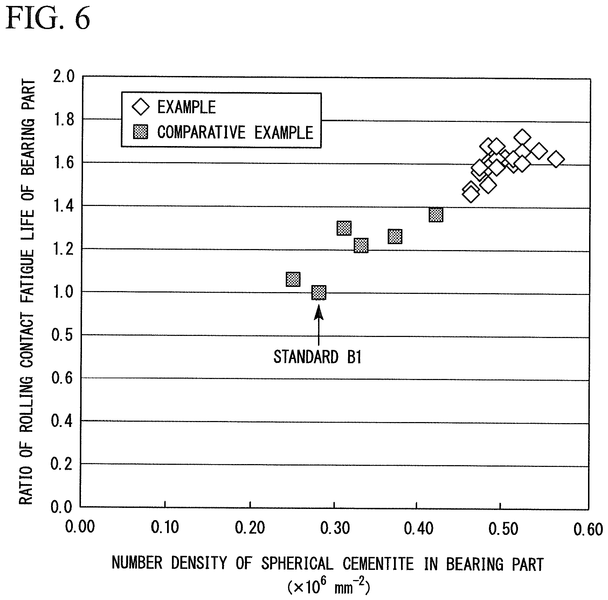

FIG. 6 shows a relationship between the number density of spherical cementite having the prescribed size in a bearing part and the rolling contact fatigue property of a bearing part. As shown in FIG. 6, when the number density of spherical cementite having an average grain size of 0.45 $\mu$m or less is $0.45 \times 10^6$ mm$^{-2}$ or more, the rolling contact fatigue life of the bearing part is good.

The number density of spherical cementite having the prescribed size can be obtained by the following method. In the center of the longitudinal direction of steel for a bearing part and a bearing part, the bearing part is cut with a cross section perpendicular to the longitudinal direction. A cut C cross section is mirror-polished; the observation is performed at the center portion of the C cross section using a scanning electron microscope (SEM) with 5000 times magnification; and photographs are taken at ten visual fields. Then, the number of spherical cementite having the prescribed size is measured at each visual field and the number is divided by the visual field area, therefore, the number density of spherical cementite having the prescribed size can be obtained. In addition, the center portion of the C cross section means a circle region which is 3 mm of radius from the center point of the C cross section, and the observation field is 0.02 mm$^2$.

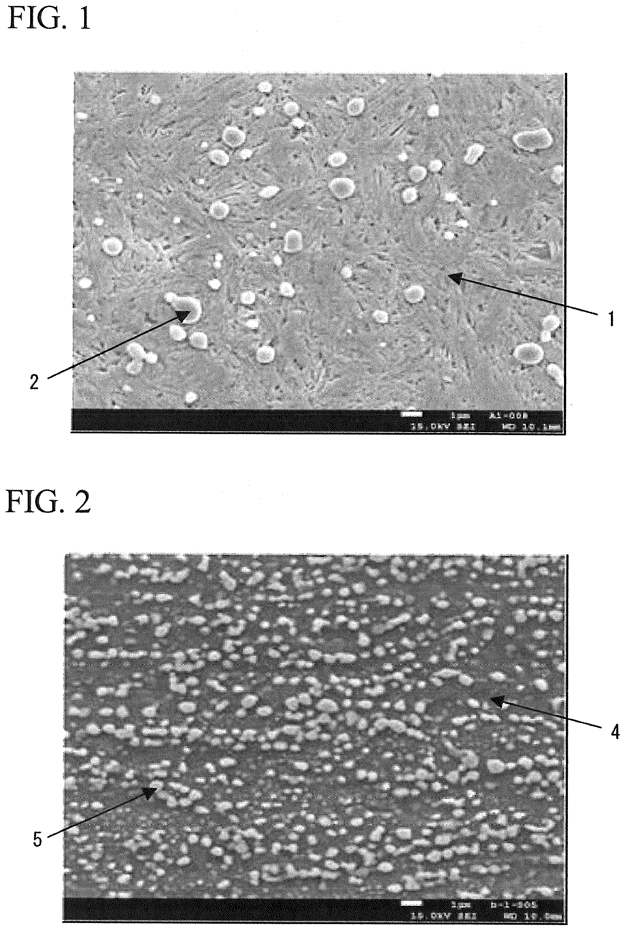

A metallographic structure of a bearing part according to the present embodiment will be described. The metallographic structure of the bearing part according to the present embodiment is retained austenite, spherical cementite and martensite. FIG. 1 shows a SEM image of the microstructure of the bearing part according to the present embodiment. The SEM image of FIG. 1 shows the microstructure where the spherical cementite 2 precipitates in the martensite 1. Because retained austenite cannot be observed with SEM, retained austenite can be determined by the ratio of the diffraction intensity of martensite to the diffraction intensity of retained austenite with X ray diffraction method (XRD).

In the metallographic structure of the bearing part according to the present embodiment, the amount of retained austenite is 18% to 25% by volume%. The sum of spherical cementite and martensite is preferably 75% to 82% by volume %, which is obtained by subtracting the amount of retained austenite from the total volume.

A metallographic structure of steel for the bearing part according to the present embodiment will be described. The metallographic structure of the steel for the bearing part according to the present embodiment includes spherical cementite and ferrite. However, in order to obtain the rolling contact fatigue life and the hardness of the bearing part, it is preferable that microstructures other than spherical cementite and ferrite are not included in the steel for the bearing part. FIG. 2 shows a SEM image of the metallographic structure of the steel for the bearing part after the spheroidizing annealing according to the present embodiment. The SEM image of FIG. 2 shows the microstructure where the spherical cementite 5 precipitates in the ferrite 4.

Hereinafter, regarding the chemical composition of the base elements of the bearing part, and the steel for the bearing part according to the present embodiment, the numerical limitation range and the reasons for the limitation will be described. Here, "%" in the following description represents "mass%".

C: 0.95% to 1.10%

C (Carbon) is an element for enhancing the strength of a bearing part. When the content of C is less than 0.95%, the strength and the rolling contact fatigue life of the bearing part in the contaminated environment cannot be improved. On the other hand, when the content of C is more than 1.10%, carbide becomes coarse and the amount of retained austenite is excessive. As a result, not only is the hardness of the bearing part lowered, but also secular changes of dimensions (aging deteriorations) become larger. Therefore, the content of C is set to 0.95% to 1.10%. In order to more reliably obtain the effect for improving the rolling contact fatigue life, the content of C is preferably 0.96% to 1.05%. More preferably, the content of C is 0.97% to 1.03%.

Si: 0.10% to 0.70%

Si (Silicon) is an element for enhancing strength and functions as a deoxidizer. When the content of Si is less than 0.10%, these effects cannot be obtained. On the other hand, when the content of Si is more than 0.70%, $SiO_2$-based inclusion generates in steel, and thus, the rolling contact fatigue life of the bearing part is reduced. Therefore, the content of Si is set to 0.10% to 0.70%. In order to more reliably not lower the rolling contact fatigue life, the content of Si is preferably 0.12% to 0.56%. More preferably, the content of Si is 0.15% to 0.50%.

Mn: 0.20% to 1.20%

Mn (Manganese) is an element which functions as a deoxidizer and as a desulfurizer. Furthermore, Mn is an element useful for securing the hardenability of the steel and the amount of retained austenite. When the content of Mn is less than 0.20%, deoxidation is insufficient and oxide is generated. As a result, the rolling contact fatigue life of the bearing part is reduced. On the other hand, when the content of Mn is more than 1.20%, supercooled structure such as martensite is generated during cooling after hot rolling, and thus voids occur during wire drawing. Furthermore, when the content of Mn is more than 1.20%, the amount of retained austenite is excessive, and thus, the hardness of the bearing part is reduced. Therefore, the content of Mn is set to 0.20% to 1.20%. In order to more reliably promote deoxidization and not to lower the rolling contact fatigue life, the content of Mn is preferably 0.21% to 1.15%. More preferably, the content of Mn is 0.25% to 1.00%.

Cr: 0.90% to 1.60%

Cr (Chromium) is an element for improving the hardenability of the steel. Furthermore, Cr is an extremely effective element for promoting spheroidizing of carbide and for increasing the amount of carbide. When the content of Cr is less than 0.90%, the amount of solid-soluted C into austenite is increased, and excessive retained austenite is generated in the bearing part. On the other hand, when the content of Cr is more than 1.60%, dissolution of carbide is limited during quenching, and thus, the amount of retained austenite is reduced or the hardenability of the bearing part is reduced. Therefore, the content of Cr is set to 0.90% to 1.60%. In order to more reliably improve the rolling contact fatigue life of the bearing part, the content of Cr is preferably 0.91% to 1.55%. More preferably, the content of Cr is 1.10% to 1.50%. Most preferably, the content of Cr is 1.30% to 1.50%.

Al: 0.010% to 0.100%

Al (Aluminum) is an element which functions as a deoxidizer. When the content of Al is less than 0.010%, deoxidation becomes insufficient and oxide precipitates. As a result, the rolling contact fatigue life of the bearing part is reduced. On the other hand, when the content of Al is more than 0.100%, AlO-based inclusion are generated. As a result, the wire drawability of the steel for the bearing part is reduced or the rolling contact fatigue life of the bearing part is reduced. Therefore, the content of Al is set to 0.010% to 0.100%. In order to more reliably not lower the rolling contact fatigue life, the content of Al is preferably 0.015% to 0.078%. More preferably, the content of Al is 0.018% to 0.050%.

N: 0.003% to 0.030%

N forms nitride with Al or B. These nitrides function as pinning particles, and thus, grains are refined. Therefore, N (Nitrogen) is an element which suppresses grain coarsening. When the content of N is less than 0.003%, this effect cannot be obtained. On the other hand, when the content of N is more than 0.030%, coarse inclusions are generated, and thus, the rolling contact fatigue life is reduced. Therefore, the content of N is set to 0.003% to 0.030%. In order to more reliably not lower the rolling contact fatigue life, the content of N is preferably 0.005% to 0.029%. More preferably, the content of N is 0.009% to 0.020%.

P: 0.025% or less

P (Phosphorus) is an impurity that is unavoidably included in steel. When the content of P is more than 0.025%, P segregates in an austenite grain boundary and embrittles an austenite grain boundary. As a result, the rolling contact fatigue life of the bearing part is reduced. Therefore, it is necessary for the content of P to be limited to 0.025% or less. In order to more reliably not lower the rolling contact fatigue life, the content of P may be limited to 0.020% or less, and more preferably limited to 0.015% or less. In addition, since the content of P is preferably as small as possible, a case where the content of P is 0% is contained into the above limited range. However, controlling the content of P to be 0% is not technically easy. Therefore, from the viewpoint of steelmaking cost, the lower limit of the content of P may be set to 0.001%. Considering normal operating conditions, the content of P is preferably 0.004% to 0.012%.

S: 0.025% or less

S (Sulfur) is an impurity that is unavoidably included in steel. When the content of S is more than 0.025%, coarse MnS forms, and thus, the rolling contact fatigue life of the bearing part is lowered. Therefore, it is necessary that the content of S is limited to 0.025% or less. In order to more reliably not lower the rolling contact fatigue life, the content of S may be limited to 0.020% or less, and preferably limited to 0.015% or less. Since the content of S is desirably as small as possible, and thus, a case where the content of S is 0% is contained into the above limited range. However, controlling the content of S to be 0% is not technically easy. Therefore, from the viewpoint of steelmaking cost, the lower limit of the content of S may be set to 0.001%. Considering the normal operating conditions, the content of S is preferably 0.003% to 0.011%.

O: 0.0010% or less

O (Oxygen) is an impurity that is unavoidably included in steel. When the content of O is more than 0.0010%, oxide inclusion forms, and thus, the rolling contact fatigue life of the bearing part is lowered. Therefore, it is necessary that the content of O is limited to 0.0010% or less. Since the content of O is desirably as small as possible, and thus, a case where the content of O is 0% is contained into the above limited range. However, controlling the content of O to be 0% is not technically easy. Therefore, from the viewpoint of steelmaking cost, the lower limit of the content of O may be set to 0.0001%. Considering the normal operating conditions, the content of O is preferably 0.0005% to 0.0010%.

In addition to the base elements and impurity elements mentioned above, the bearing part according to the present embodiment may optionally include at least one of the group consisting of Mo, B, Cu, Ni and Ca. In this case, one or more of Mo, B, Cu and Ni for improving the hardenability, and Ca for refining the inclusion can be selected. Regarding these chemical elements, since there is no need to add them to the steel for the bearing part and the bearing part, the lower limits of these chemical elements are 0% and are not limited.

Hereinafter, the preferred range of the selective elements and the reasons for limiting will be described. Here, "%" in the following description represents "mass%".

Mo: 0.25% or less

Mo is an element for improving the hardenability. In addition, Mo has effects for improving grain boundary strength of the steel after quenching is performed and for enhancing the toughness of the steel. If it is desirable to more reliably secure the hardenability and toughness, the content of Mo is preferably set to 0.01% or more. However, when the content of Mo is more than 0.25%, these effects are saturated. Therefore, the content of Mo is preferably 0.01% to 0.25%. More preferably, the content of Mo is 0.01% to 0.23%. Even more preferably, the content of Mo is 0.10% to 0.23%.

B: 0.0050% or less

B is an element for improving the hardenability, even if the content of B is small. In addition, B also has effects for suppressing segregation of P or S at the austenite grain boundary during quenching. If it is desirable to obtain these effects, the content of B is preferably set to 0.0001% or more. However, when the content of B is more than 0.0050%, these effects are saturated. Therefore, the content of B is preferably 0.0001% to 0.0050%. More preferably, the content of B is 0.0003% to 0.0050%. Even more preferably, the content of B is 0.0005% to 0.0025%. Most preferably, the content of B is 0.0010% to 0.0025%.

Cu: 1.0% or less

Cu is an element for improving the hardenability. If it is desirable to more reliably secure the hardenability, the content of Cu is preferably set to 0.05% or more. However, when the content of Cu is more than 1.0%, this effect is saturated, furthermore, hot workability is deteriorated. Therefore, the content of Cu is preferably 0.05% to 1.0%. More preferably, the content of Cu is 0.10% to 0.50%. Even more preferably, the content of Cu is 0.19% to 0.31%.

Ni: 3.0% or less

Ni is an element for improving the hardenability. In addition, Ni has an effect of improving the toughness of the steel after quenching is performed. If it is desirable to more reliably secure the hardenability and toughness, the content of Ni is preferably set to 0.05% or more. However, when the content of Ni is more than 3.0%, this effect is saturated. Therefore, the content of Ni is preferably 0.05% to 3.0%. More preferably, the content of Ni is 0.10% to 1.5%. Even more preferably, the content of Ni is 0.21% to 1.2%. Most preferably, the content ofNi is 0.21% to 1.0%.

Ca: 0.0015% or less

Ca is an element that is solid-soluted into sulfide and forms CaS, and thus, refines the sulfide. If it is desirable to more improve the rolling contact fatigue life by refining the sulfide, the content of Ca is preferably set to 0.0003% or more. However, when the content of Ca is more than 0.0015%, this effect is saturated. Furthermore, since oxide inclusion coarsens, and it causes a lowering of the rolling contact fatigue life. Therefore, the content of Ca is preferably 0.0003% to 0.0015%. More preferably, the content of Ca is 0.0003% to 0.0011%. Even more preferably, the content of Ca is 0.0005% to 0.0011%.

The bearing part and the steel for the bearing part according to the present embodiment include the above described components, and the remainder of the chemical composition consists of substantially Fe and unavoidable impurities.

A metallographic structure of a bearing part according to the present embodiment will be described.

The metallographic structure of the bearing part according to the present embodiment is retained austenite, spherical cementite and martensite.

Among these microstructures, the amount of retained austenite is 18% to 25%, by volume%. In order to improve the rolling contact fatigue life even in a contaminated environment, it is necessary that the amount of retained austenite 18% to 25%, the average grain size of spherical cementite be 0.45 $\mu$m or less, and the number density of spherical cementite be 0.45 $\times$ 10$^6$ mm$^{-2}$ or more. The number density of spherical cementite is preferably 0.5 $\times$ 10$^6$ mm$^{-2}$ or more. In addition, the upper limit of the number density of spherical cementite is not particularly limited; however, the upper limit of the number density of spherical cementite is preferably 1.0 $\times$ 10$^6$ mm$^{-2}$ in view of considering the constraints on production or securing the rolling contact fatigue life. In addition, although the average grain size of spherical cementite is reduced excessively, the effect for improving the rolling contact fatigue life is small, and it is difficult to produce them. Therefore, the average grain size of the spherical cementite of the bearing part is preferably 0.25 $\mu$m or more. That is, the preferred average grain size of spherical cementite of the bearing part according to the present embodiment is 0.25 $\mu$m to 0.45 $\mu$m.

In addition, the average grain size of spherical cementite can be obtained by the following method. Firstly, the bearing part is cut on the cross section (C cross section) perpendicular to the longitudinal direction in a center of a longitudinal direction of the bearing part. A range within a radius of 3mm from a center of the C cross section is set to a center portion, and photographs are taken at the center portion using a SEM with 2000 times magnification. Next, the spherical cementite among the captured images is copied using the tracing sheet or the like; and the grain size of cementite is measured by image analyzing the tracing sheet. In addition, four visual fields are measured in each sample, and an average value of grain sizes of spherical cementite in the obtained four visual fields is set to the average grain size of spherical cementite.

Furthermore, in order to secure the amount of retained austenite, the average grain size of prior-austenite of the bearing part according to the present embodiment is 6.0 µm or less. When the average grain size of prior-austenite is more than 6.0 µm, the necessary amount of retained austenite cannot be obtained. On the other hand, if the average grain size of prior-austenite of the bearing part is refined to less than 3.0 µm or less, the manufacturing load is increased. Therefore, the average grain size of prior-austenite of the bearing part is preferably 3.0 µm or more. That is, the average grain size of prior-austenite of the bearing part according to the present embodiment is preferably 3.0 µm to 6.0 µm.

Next, a metallographic structure of steel for a bearing part which is a material for a bearing part according to the present embodiment will be described.

The metallographic structure of the steel for the bearing part according to the present embodiment includes spherical cementite and ferrite. Among these structures, the number density of spherical cementite having a grain size of 0.5 µm to 3.0 µm is $2.0 \times 10^6$ mm$^{-2}$ or more. When the number density of spherical cementite having a prescribed size in the steel for the bearing part is less than $2.0 \times 10^6$ mm$^{-2}$, the spherical cementite of the bearing part after quenching and tempering is reduced and the rolling contact fatigue life of the bearing part is lowered. In addition, the upper limit of the number density of spherical cementite is not particularly limited; however, the upper limit of the number density of spherical cementite is preferably $5.0 \times 10^6$ mm$^{-2}$ in view of considering the constraints on production or securing the rolling contact fatigue life.

Next, a microstructure of hot rolled wire rod which is a material for steel for a bearing part will be described.

The hot rolled wire rod has the same chemical composition as the bearing part. Then, it is preferable that the hot rolled wire rod has a metallographic structure consisting of pearlite and 5% or less of proeutectoid cementite by area ratio. When the hot rolled wire rod has supercooled structure such as martensite in the metallographic structure, it cannot be uniformly deformed during wire drawing. As a result, it may cause breaking wire. Therefore, it is preferable that the hot rolled wire rod does not include martensite and mainly include pearlite as the microstructure.

In addition, the size of the pearlite block has a very strong correlation with ductility. In other words, the wire drawability can be improved by refining the pearlite. Therefore, it is preferable that the average grain size of the pearlite block (circle equivalent diameter) be 15 µm or less. When the average grain size of the pearlite block is more than 15 µm, an effect of improving the wire drawability may not be obtained. On the other hand, it may be industrially difficult to control the average grain size of the pearlite block to 1 µm or less. Therefore, the average grain size of the pearlite block is preferably 1 µm to 15 µm. More preferably, the average grain size of the pearlite block is 1 µm to 10 µm.

The average grain size of the pearlite block (circle equivalent diameter) can be measured with an electron backscatter diffraction apparatus (EBSD).

The proeutectoid cementite generally has little plastic deformability. Therefore, the proeutectoid cementite is divided by wire drawing, and it results in formation of voids. However, when the area ratio of the proeutectoid cementite is low and the thickness of the proeutectoid cementite is small, wire drawability is not inhibited. Accordingly, it is preferable that the proeutectoid cementite be 5% or less by area ratio and the thickness of the proeutectoid cementite be 1.0 µm or less. More preferably, the proeutectoid cementite is 3% or less by area ratio and the thickness of the proeutectoid cementite is 0.8 µm or less.

The area ratio of the proeutectoid cementite and the thickness of the proeutectoid cementite can be measured by observation with SEM.

When the above described chemical composition and metallographic structure are satisfied, a bearing part having an excellent rolling contact fatigue life can be obtained even in a contaminated environment. In order to obtain the above-described bearing part, the bearing part may be produced by the manufacturing method, which will be described later.

Next, it will be described the preferred method for producing a bearing part and steel for a bearing part according to the present embodiment.

A bearing part according to the present embodiment can be manufactured as follows.

In addition, the method for producing a bearing part, steel for a bearing part which is a material for a bearing part and the method for producing a hot rolled wire rod which is a material for steel for a bearing part as described below are examples to obtain a bearing part according to the present invention; and the present invention is not limited to the following procedures and methods. As long as the method can realize the configuration of the present invention, it is possible to adopt any methods.

Normal manufacturing conditions can be employed as a method for producing a hot rolled wire rod which is a material for steel for a bearing part.

For example, steel having the chemical composition adjusted in the usual manner is melted and casted, and then, the steel is subjected to soaking treatment and blooming as needed, to form a billet. Next, the obtained billet is heated and is subjected to hot rolling. Then, after the hot rolled steel is annularly wound, the wound steel is cooled.

The hot rolled wire rod which is the material for the steel for the bearing part according to the present embodiment can be manufactured through the above processes.

In casting process, the method for casting is not particularly limited, and a vacuum casting, a continuous casting or the like may be used.

In addition, the soaking treatment (soaking diffusion treatment), to which cast piece after the casting process is subjected as needed, is a heat treatment for reducing segregation which the casting or the like causes. The steel piece obtained through these processes is commonly referred to as a billet.

Furthermore, a heating temperature during the soaking treatment is preferably 1100°C to 1200°C. In addition, a holding time of the soaking treatment is preferably 10 hours to 20 hours.

Next, the billet is heated in the heating process before hot rolling. The heating temperature of the billet is preferably set to 900°C to 1300°C.

Then, the above billet is subjected to the hot rolling as the hot rolling process. In the hot rolling process, a finish rolling temperature is preferably set to 850°C or less.

When the finish rolling temperature is 850°C or less, the proeutectoid cementite is dispersed and precipitated. As a result, the thickness of the proeutectoid cementite can be reduced. In addition, when the finish rolling temperature is 850°C or less, a nucleation site of pearlite is increased during a transformation. As a result, the pearlite block can be refined. More preferably, the finish rolling temperature is 800°C or less. On the other hand, when the finish rolling temperature is less than 650°C, there is a case where pearlite block cannot be refined. Therefore, the finish rolling temperature is preferably 650°C or more.

A temperature of the billet during the hot rolling can be measured with radiation thermometer.

Steel, which has passed through the hot rolling process and is a material for steel for a bearing part, that is, steel after the finish rolling is commonly referred to as the hot rolled wire rod.

After the hot rolling process is finished, that is, after the finish rolling, the hot rolled wire rod is annularly wound at a temperature of 800°C or less. This process is commonly referred to as the winding process.

In the winding process, when the winding temperature is high, there is a case where austenite grain grows and the pearlite block coarsens. Therefore, the winding temperature is preferably 800°C or less. More preferably, the winding temperature is 770°C or less. On the other hand, when the winding temperature is less than 650°C, there is a case where the wire breakage occurs. Therefore, the winding temperature is preferably 650°C or more.

In addition, after the hot rolling process is finished, there may be a cooling process before the winding, in which the cooling is performed as needed.

After the winding process, the rolled wire rod is cooled to 600°C. This process is commonly referred to as the cooling process.

The cooling rate to 600°C is preferably set to 0.5 °C/s to 3.0 °C/s.

After the rolled wire rod is wound, when the wound wire rod is cooled to 600°C, transformation to the pearlite is completed. There is a case where the cooling rate after winding influences the transformation to pearlite from austenite. Therefore, in order to suppress the precipitation of the supercooled structure such as martensite or bainite, the cooling rate after winding is preferably 3.0 °C/s or less. More preferably, the cooling rate after winding is 2.3 °C/s or less. On the other hand, there is a case where the cooling rate after winding also influences the precipitation of proeutectoid cementite. Therefore, in order to suppress the excessive precipitation of proeutectoid cementite or coarsening of proeutectoid cementite, the cooling rate after winding is preferably 0.5 °C/s or more. More preferably, the cooling rate after winding is 0.8 °C/s or more.

Although a conventional method for producing a bearing part has a spheroidizing annealing process before wire drawing, steel for a bearing part according to the present embodiment does not have the spheroidizing annealing process before the wire drawing. That is, the hot rolled wire rod obtained through the above processes is not subjected to the spheroidizing annealing and is subjected to the wire drawing in which the total reduction of area is 50% or more. Then, after the wire drawing, the spheroidizing annealing is performed at a temperature of 650°C to the lower of 750°C and $A_1$-5°C; thereby, the steel for the bearing part is manufactured.

Then, after the obtained steel for the bearing part is formed, the bearing part is obtained by performing the quenching and the tempering.

When the hot rolled wire rod which is a material for the steel for the bearing part is subjected to the wire drawing in which the total reduction of area is 50% or more, spheroidizing of the cementite is promoted during the spheroidizing annealing because of introduced strain. Therefore, the cementite is spheroidized at a low temperature in a short time; the average grain size of spherical cementite of the steel for the bearing part can be refined and the number density of spherical cementite in the steel for the bearing part can be larger. Since the steel for the bearing part manufactured in this manner has a sufficient amount of spherical cementite, the average grain size of austenite can be refined during quenching. Then, when the average grain size of austenite is refined, the amount of retained austenite of the bearing part can be secured and the grain size of the prior-austenite of the bearing part can be refined.

When the total reduction of area is less than 50%, a prescribed amount of retained austenite cannot be secured in the steel for the bearing part. In addition, there is a case where the prior-austenite of the bearing part cannot be refined due to insufficient spheroidizing of cementite. On the other hand, when the total reduction of area is more than 97%, there is a concern that the wire breakage occurs during the wire drawing. Therefore, the total reduction of area is preferably set to 50% to 97%.

A heating temperature of the spheroidizing annealing after the wire drawing is set to less than 750°C and to $A_1$-5°C or less in order to increase the number density of spherical cementite in the steel for the bearing part. In addition, the number of times of the spheroidizing annealing is set to one.

When the spheroidizing annealing is performed at a high temperature that is 750°C or more or more than $A_1$-5°C, the number density of spherical cementite in the steel for the bearing part is lowered. Furthermore, since transformation to austenite is started in the steel for the bearing part, there is a case where changes in wire diameter become larger. Therefore, it is preferably heated at a temperature of 750°C or $A_1$-5°C, whichever is less.

On the other hand, when the heating temperature of the spheroidizing annealing after the wire drawing is less than 650°C, the cementite is spheroidized in the steel for the bearing part insufficiently, and thus, the cementite remains as the pearlite. Therefore, since grain size of austenite is coarsened during quenching and the hardness is increased, and there is a concern that workability of the bearing part is reduced. Accordingly, the heating temperature of the spheroidizing annealing after the wire drawing is preferably 650°C or more.

That is, the heating temperature of the spheroidizing annealing is a temperature of 650°C to the lower of 750°C and $A_1$-5°C.

In addition, $A_1$ means a temperature at which $A_1$ transformation starts and unit thereof is Celsius degree (°C). Furthermore, $A_1$ can be calculated simply by the following equation 1 based on the chemical components.

Here, [C], [Si], [Mn], [Cu], [Ni], [Cr], [Mo], [Al] and [B] in the equation represent, by mass%, the content of C, the content of Si, the content of Mn, the content of Cu, the content of Ni, the content of Cr, the content of Mo, the content of Al and the content of B in the hot rolled wire rod, respectively.

$$A_1=750.8-26.6\times[C]+17.6\times[Si]-11.6\times[Mn]-22.9\times[Cu]-23.0\times[Ni]+24.1\times[Cr]+22.5\times[Mo]-169.4\times[Al]-894.7\times[B] \quad \text{(Equation 1)}$$

In addition, it is held at the above temperature for 0.5 hours to 5 hours in the spheroidizing annealing. When the holding time is less than 0.5 hours, spheroidizing is insufficient. When the holding time is more than 5 hours, there is a case where the number density of prescribed spherical cementite is reduced.

The steel for the bearing part after the spheroidizing annealing is formed (rough formed), and then the quenching is performed. The heating temperature of quenching in the quenching after the spheroidizing annealing is preferably set to 820°C or more so that a certain amount of cementite can be solid-soluted into the austenite. When the heating temperature of the quenching is less than 820°C, the cementite is not solid-soluted into the austenite sufficiently, and thus, there is a case where hardness of the bearing part is reduced. On the other hand, when the heating temperature of the quenching is more than 890°C, there is a concern that the average grain size of the prior-austenite in the bearing part coarsens. Therefore, the heating temperature of the quenching is preferably set to 820°C to 890°C.

In addition, a holding time in the quenching is preferably 0.5 hours to 2 hours. When the holding time is less than 0.5 hours, the cementite is not solid-soluted into the austenite sufficiently. When the holding time is more than 2 hours, the cementite is resolved and C is solid-soluted into the austenite excessively. As a result, the retained austenite of the bearing part may be increased, or the average grain size of the prior-austenite of the bearing part may be coarsened.

A tempering temperature in the tempering is preferably 150°C or more in order to secure the toughness and adjust the hardness. When the tempering temperature is less than 150°C, there is a case where the toughness of the bearing part cannot be secured. On the other hand, when the tempering temperature is more than 250°C, the hardness of the bearing part is lowered, and there is a concern that the rolling contact fatigue life is reduced. Therefore, the tempering temperature is preferably set to 150°C to 250°C.

In addition, a holding time in the tempering is preferably 0.5 hours to 3 hours. When the holding time is less than 0.5 hours, there is a case where the toughness of the bearing part is not secured. Even when the tempering is performed for more than 3 hours, properties are not changed, and thus, only productivity is reduced.

The finish machining is subjected to the steel for the bearing part after the tempering; therefore the bearing part can be obtained.

As described above, when the preferred manufacturing method of the present invention is employed, the metallographic structure of the bearing part and the metallographic structure of the steel for the bearing part can be within the scope of the present invention.

[Examples]

Hereinafter, effects of the bearing part according to the present embodiment will be more specifically described by using examples of the bearing part of the present invention. Here, conditions of Examples are merely examples of conditions employed to check the operability and effects of the present invention, and the present invention is not limited to the following examples of conditions. Accordingly, the present invention can employ various conditions, and all of these conditions are contained in the technical features of the present invention.

By subjecting the wire rods or bars having components shown in Table 1-1 and Table 1-2 to heat treatment or hot forging, hot rolled wire rods having microstructure shown in Table 2-1 and Table 2-2 were obtained. Next, the hot rolled wire rods were subjected to cold wire drawing until diameters were φ 10 mm. Then, the hot rolled wire rods obtained by the wire drawing were cut (into lengths of 10 mm) so that the length in the longitudinal direction was 10 mm. Then, the hot rolled wire rods obtained by cutting were subjected to the spheroidizing annealing at spheroidizing temperature as shown in Table 2-1 and Table 2-2 for 0.5 hours to 3 hours, and thereby they were adjusted to the microstructures including spherical cementite and ferrite. As a result, steels for bearing parts were obtained. The steels for bearing parts were formed into sphere types of φ 9.5 mm. Next, after the quenching and the tempering were performed, the steels for bearing parts were subjected to the finish machining; thereby manufacturing the bearing parts. The quenching was performed at the quenching temperature as shown in Table 2-1 and Table 2-2, in which the holding time of the quenching was 60 minutes, and the cooling was oil cooling. Next, the tempering was performed at the tempering temperature as shown in Table 2-1 and Table 2-2, and the holding time of the tempering was 90 minutes. The structures of the hot rolled wire rods, the reduction of area during the wire drawing, the temperatures of the quenching and the tempering are shown in Table 2.

The microstructures of the hot rolled wire rods, the microstructures of the steels for bearing parts and the bearing parts were evaluated using an optical microscope. Then, the average grain size of prior-austenite (μm) of the bearing parts was measured using a SEM. In addition, the measurements of the average grain size of spherical cementite (μm) of the steels for bearing parts and the bearing parts, and the measurements of the number density of spherical cementite (mm$^{-2}$) in the steels for bearing parts and the bearing parts were carried out using a SEM. In addition, the measurement of the amount of retained austenite (volume%) of the bearing parts was carried out using X-ray diffraction method.

The measurement of the rolling contact fatigue life of the bearing parts was carried out using a radial type fatigue testing machine.

Normal rolling contact fatigue life of the bearing parts was tested in an environment including only lubricating oil. Furthermore, rolling contact fatigue life of the bearing parts was measured in a contaminated environment where 1g of an iron powder having a hardness of 750 Hv to 800 Hv and a particle size of 100 μm to 180 μm was mixed into 1L of lubricating oil. Then, life of the cumulative failure probability of 10% was obtained using the measured rolling contact fatigue life with Weibull statistical analysis. The rolling contact fatigue life in a normal and contaminated environment was based on the life of B1, which has the same component as SUJ2, manufactured in the current production method, and it was expressed by the ratio to the life of B1, in Table 2-1 and Table 2-2.

[Table 1-1]

TABLE 1-1

CHEMICAL COMPOSITION (mass%)

| No. | C | Si | Mn | Cr | P | S | Al | N | O | Mo | B | Cu | Ni | Ca | $A_1$ | REMARKS |
|---|---|---|---|---|---|---|---|---|---|---|---|---|---|---|---|---|
| A1 | 1.01 | 0.25 | 0.35 | 1.41 | 0.007 | 0.005 | 0.018 | 0.005 | 0.0009 | | | | | | 755 | EXAMPLE |
| A2 | 1.05 | 0.15 | 0.30 | 1.40 | 0.008 | 0.004 | 0.020 | 0.012 | 0.0010 | | | | | 0.0003 | 752 | EXAMPLE |
| A3 | 1.00 | 0.20 | 0.50 | 1.10 | 0.008 | 0.005 | 0.015 | 0.013 | 0.0008 | 0.03 | | | 0.21 | | 742 | EXAMPLE |
| A4 | 0.97 | 0.12 | 0.21 | 0.91 | 0.010 | 0.009 | 0.078 | 0.012 | 0.0005 | 0.05 | 0.0001 | | 0.50 | | 723 | EXAMPLE |
| A5 | 1.05 | 0.54 | 1.15 | 1.55 | 0.008 | 0.005 | 0.032 | 0.018 | 0.0007 | 0.01 | | | | | 751 | EXAMPLE |
| A6 | 0.98 | 0.15 | 0.99 | 1.50 | 0.006 | 0.011 | 0.025 | 0.011 | 0.0006 | | 0.0002 | | | 0.0006 | 748 | EXAMPLE |
| A7 | 1.00 | 0.56 | 0.25 | 1.41 | 0.004 | 0.005 | 0.023 | 0.014 | 0.0006 | 0.23 | | | | | 766 | EXAMPLE |
| A8 | 1.01 | 0.24 | 0.28 | 1.38 | 0.011 | 0.008 | 0.019 | 0.029 | 0.0008 | | 0.0021 | 0.31 | | | 750 | EXAMPLE |
| A9 | 0.99 | 0.26 | 0.34 | 1.40 | 0.007 | 0.008 | 0.021 | 0.012 | 0.0009 | | | 0.19 | | | 751 | EXAMPLE |
| A10 | 1.00 | 0.26 | 0.37 | 1.41 | 0.007 | 0.009 | 0.018 | 0.014 | 0.0008 | | | | 1.20 | | 728 | EXAMPLE |
| A11 | 1.03 | 0.25 | 0.35 | 1.44 | 0.012 | 0.010 | 0.019 | 0.013 | 0.0007 | | | | | 0.0011 | 755 | EXAMPLE |
| A12 | 0.96 | 0.21 | 0.33 | 1.36 | 0.009 | 0.006 | 0.019 | 0.015 | 0.0008 | | | | | | 755 | EXAMPLE |
| A13 | 1.00 | 0.25 | 0.34 | 1.41 | 0.007 | 0.003 | 0.019 | 0.009 | 0.0007 | | | | | | 755 | EXAMPLE |
| A14 | 1.00 | 0.25 | 0.34 | 1.41 | 0.007 | 0.003 | 0.019 | 0.009 | 0.0007 | | | | | | 755 | EXAMPLE |
| A15 | 1.00 | 0.25 | 0.34 | 1.41 | 0.007 | 0.003 | 0.019 | 0.009 | 0.0007 | | | | | | 755 | EXAMPLE |
| A16 | 1.00 | 0.25 | 0.34 | 1.41 | 0.007 | 0.003 | 0.019 | 0.009 | 0.0007 | | | | | | 755 | EXAMPLE |
| A17 | 1.00 | 0.25 | 0.34 | 1.41 | 0.007 | 0.003 | 0.019 | 0.009 | 0.0007 | | | | | | 755 | EXAMPLE |
| A18 | 1.00 | 0.25 | 0.34 | 1.41 | 0.007 | 0.003 | 0.019 | 0.009 | 0.0007 | | | | | | 755 | EXAMPLE |
| A19 | 1.00 | 0.25 | 0.34 | 1.41 | 0.007 | 0.003 | 0.019 | 0.009 | 0.0007 | | | | | | 755 | EXAMPLE |

[Table 1-2]

[Table 1-2]

TABLE 1-2

| No. | CHEMICAL COMPOSITION (mass%) | | | | | | | | | | | | | | $A_1$ | REMARKS |
|---|---|---|---|---|---|---|---|---|---|---|---|---|---|---|---|---|
| | C | Si | Mn | Cr | P | S | Al | N | O | Mo | B | Cu | Ni | Ca | | |
| A20 | 0.91 | 0.25 | 0.35 | 1.40 | 0.005 | 0.005 | 0.011 | 0.012 | 0.0006 | | | | | | 761 | COMPARATIVE EXAMPLE |
| A21 | 1.19 | 0.25 | 0.28 | 1.43 | 0.006 | 0.006 | 0.021 | 0.011 | 0.0005 | | | | | | 751 | COMPARATIVE EXAMPLE |
| A22 | 1.06 | 0.83 | 0.29 | 1.35 | 0.008 | 0.005 | 0.011 | 0.013 | 0.0008 | 0.05 | | | | | 766 | COMPARATIVE EXAMPLE |
| A23 | 0.96 | 0.18 | 1.56 | 1.44 | 0.007 | 0.005 | 0.030 | 0.012 | 0.0006 | | 0.0002 | | | 0.0005 | 740 | COMPARATIVE EXAMPLE |
| A24 | 0.99 | 0.25 | 0.06 | 1.45 | 0.007 | 0.005 | 0.029 | 0.014 | 0.0010 | | 0.0001 | | | | 758 | COMPARATIVE EXAMPLE |
| A25 | 1.05 | 0.35 | 0.35 | 0.80 | 0.008 | 0.004 | 0.021 | 0.013 | 0.0008 | | | | | | 741 | COMPARATIVE EXAMPLE |
| A26 | 1.05 | 0.25 | 0.36 | 1.46 | 0.006 | 0.006 | 0.190 | 0.012 | 0.0005 | | | | | | 726 | COMPARATIVE EXAMPLE |
| A27 | 1.05 | 0.50 | 0.23 | 1.63 | 0.011 | 0.008 | 0.016 | 0.011 | 0.0005 | | | | | | 766 | COMPARATIVE EXAMPLE |
| A28 | 1.00 | 0.28 | 0.34 | 1.40 | 0.006 | 0.031 | 0.050 | 0.014 | 0.0007 | 0.21 | | | | | 755 | COMPARATIVE EXAMPLE |
| A29 | 1.00 | 0.27 | 0.35 | 1.41 | 0.029 | 0.007 | 0.051 | 0.014 | 0.0007 | | | | | | 750 | COMPARATIVE EXAMPLE |
| A30 | 1.02 | 0.25 | 0.35 | 1.39 | 0.008 | 0.010 | 0.008 | 0.011 | 0.0012 | | 0.0002 | | | | 756 | COMPARATIVE EXAMPLE |
| A31 | 1.01 | 0.24 | 0.34 | 1.41 | 0.009 | 0.009 | 0.016 | 0.041 | 0.0009 | | | | | | 755 | COMPARATIVE EXAMPLE |
| A32 | 1.00 | 0.24 | 0.34 | 1.41 | 0.008 | 0.005 | 0.021 | 0.010 | 0.0007 | | | | | | 755 | COMPARATIVE EXAMPLE |
| A33 | 1.00 | 0.24 | 0.34 | 1.41 | 0.008 | 0.005 | 0.021 | 0.010 | 0.0007 | | | | | | 755 | COMPARATIVE EXAMPLE |
| A34 | 1.00 | 0.24 | 0.34 | 1.41 | 0.008 | 0.005 | 0.021 | 0.010 | 0.0007 | | | | | | 755 | COMPARATIVE EXAMPLE |
| A35 | 1.00 | 0.24 | 0.34 | 1.41 | 0.008 | 0.005 | 0.021 | 0.010 | 0.0007 | | | | | | 755 | COMPARATIVE EXAMPLE |
| A36 | 1.00 | 0.24 | 0.34 | 1.41 | 0.008 | 0.005 | 0.021 | 0.010 | 0.0007 | | | | | | 755 | COMPARATIVE EXAMPLE |
| A37 | 1.00 | 0.24 | 0.34 | 1.41 | 0.008 | 0.005 | 0.021 | 0.010 | 0.0007 | | | | | | 755 | COMPARATIVE EXAMPLE |
| B1 | 1.01 | 0.25 | 0.35 | 1.41 | 0.007 | 0.005 | 0.018 | 0.005 | 0.0009 | | | | | | 755 | COMPARATIVE EXAMPLE |
| B2 | 1.04 | 0.25 | 1.01 | 0.91 | 0.007 | 0.005 | 0.018 | 0.005 | 0.0009 | 0.20 | 0.0020 | | 1.00 | 0.0015 | 718 | COMPARATIVE EXAMPLE |

[Table 2-1]

[Table 2-1]

TABLE 2-1

| No. | HOT ROLLED WIRE ROD | METHOD FOR PRODUCING BEARING PART | | | | STEEL FOR BEARING PART | | BEARING PART | | | | | | RATIO OF ROLLING CONTACT FATIGUE LIFE ($L_{10}/B1_{10}$) | RATIO OF ROLLING CONTACT FATIGUE LIFE IN CONTAMINATED ENVIRONMENT ($L_{10}/B1_{10}$) | REMARKS |
|---|---|---|---|---|---|---|---|---|---|---|---|---|---|---|---|---|
| | MICRO STRUCTURE | TOTAL REDUCTION OF AREA DURING WIRE DRAWING (%) | SPHEROIDIZING TEMPERATURE (°C) | QUENCHING TEMPERATURE (°C) | TEMPERING TEMPERATURE (°C) | MICRO STRUCTURE | NUMBER DENSITY OF SPHERICAL CEMENTITE ($\times 10^6$ mm$^{-2}$) | MICRO STRUCTURE | AVERAGE GRAIN SIZE OF PRIOR-AUSTENITE ($\mu$m) | AMOUNT OF RETAINED AUSTENITE (%) | AVERAGE GRAIN SIZE OF SPHERICAL CEMENTITE ($\mu$m) | NUMBER DENSITY OF SPHERICAL CEMENTITE ($\times 10^6$ mm$^{-2}$) | | | |
| A1 | P + $\theta$ | 75 | 700 | 850 | 170 | SPHERICAL $\theta$ + $\alpha$ | 2.34 | RETAINED $\gamma$ + SPHERICAL $\theta$ + M | 5.6 | 18.5 | 0.40 | 0.47 | 1.56 | 2.2 | EXAMPLE |
| A2 | P + $\theta$ | 75 | 680 | 850 | 170 | SPHERICAL $\theta$ + $\alpha$ | 2.87 | RETAINED $\gamma$ + SPHERICAL $\theta$ + M | 4.5 | 19.4 | 0.41 | 0.51 | 1.60 | 2.2 | EXAMPLE |
| A3 | P + $\theta$ | 75 | 680 | 850 | 170 | SPHERICAL $\theta$ + $\alpha$ | 2.65 | RETAINED $\gamma$ + SPHERICAL $\theta$ + M | 5.1 | 20.1 | 0.39 | 0.48 | 1.68 | 2.1 | EXAMPLE |
| A4 | P + $\theta$ | 75 | 680 | 850 | 170 | SPHERICAL $\theta$ + $\alpha$ | 2.24 | RETAINED $\gamma$ + SPHERICAL $\theta$ + M | 5.5 | 18.2 | 0.35 | 0.46 | 1.48 | 2.0 | EXAMPLE |

| No. | HOT ROLLED WIRE ROD MICRO-STRUC-TURE | METHOD FOR PRODUCING BEARING PART | | | | STEEL FOR BEARING PART | | BEARING PART | | | | | | RATIO OF ROLLING CONTACT FATIGUE LIFE ($L_{10}/B1_{10}$) | RATIO OF ROLLING CONTACT FATIGUE LIFE IN CONTAMINATED ENVIRONMENT ($L_{10}/B1_{10}$) | RE-MARKS |
|---|---|---|---|---|---|---|---|---|---|---|---|---|---|---|---|---|
| | | TOTAL REDUCTION OF AREA DURING WIRE DRAWING (%) | SPHEROIDIZING TEMPERATURE (°C) | QUENCHING TEMPERATURE (°C) | TEMPERING TEMPERATURE (°C) | MICRO-STRUCTURE | NUMBER DENSITY OF SPHERICAL CEMENTITE ($\times 10^6$ mm$^{-2}$) | MICRO-STRUC-TURE | AVERAGE GRAIN SIZE OF PRIOR-AUSTENITE ($\mu$m) | AMOUNT OF RETAINED AUSTENITE (%) | AVERAGE GRAIN SIZE OF SPHERICAL CEMENTITE ($\mu$m) | NUMBER DENSITY OF SPHERICAL CEMENTITE ($\times 10^6$ mm$^{-2}$) | | | | |
| A5 | P + $\theta$ | 75 | 680 | 850 | 170 | SPHERICAL $\theta$ + $\alpha$ | 2.93 | RETAINED $\gamma$ + SPHERICAL $\theta$ + M | 4.3 | 24.1 | 0.44 | 0.56 | 1.62 | 2.6 | EXAMPLE |
| A6 | P + $\theta$ | 75 | 680 | 850 | 170 | SPHERICAL $\theta$ + $\alpha$ | 2.89 | RETAINED $\gamma$ + SPHERICAL $\theta$ + M | 4.3 | 22.4 | 0.41 | 0.50 | 1.62 | 2.5 | EXAMPLE |
| A7 | P + $\theta$ | 75 | 680 | 850 | 170 | SPHERICAL $\theta$ + $\alpha$ | 2.66 | RETAINED $\gamma$ + SPHERICAL $\theta$ + M | 4.7 | 23.9 | 0.41 | 0.48 | 1.60 | 2.3 | EXAMPLE |
| A8 | P + $\theta$ | 75 | 680 | 850 | 170 | SPHERICAL $\theta$ + $\alpha$ | 2. 73 | RETAINED $\gamma$ + SPHERICAL $\theta$ + M | 4.6 | 19.8 | 0.42 | 0.52 | 1.72 | 2.2 | EXAMPLE |

EP 3 093 361 B1

19

(continued)

| No. | HOT ROLLED WIRE ROD MICROSTRUCTURE | METHOD FOR PRODUCING BEARING PART | | | | STEEL FOR BEARING PART | | BEARING PART | | | | | RATIO OF ROLLING CONTACT FATIGUE LIFE ($L_{10}/B1_{10}$) | RATIO OF ROLLING CONTACT FATIGUE LIFE IN CONTAMINATED ENVIRONMENT ($L_{10}/B1_{10}$) | REMARKS |
|---|---|---|---|---|---|---|---|---|---|---|---|---|---|---|---|
| | | TOTAL REDUCTION OF AREA DURING WIRE DRAWING (%) | SPHEROIDIZING TEMPERATURE (°C) | QUENCHING TEMPERATURE (°C) | TEMPERING TEMPERATURE (°C) | MICROSTRUCTURE | NUMBER DENSITY OF SPHERICAL CEMENTITE ($\times 10^6$ mm$^{-2}$) | MICROSTRUCTURE | AVERAGE GRAIN SIZE OF PRIOR-AUSTENITE ($\mu$m) | AMOUNT OF RETAINED AUSTENITE (%) | AVERAGE GRAIN SIZE OF SPHERICAL CEMENTITE ($\mu$m) | NUMBER DENSITY OF SPHERICAL CEMENTITE ($\times 10^6$ mm$^{-2}$) | | | |
| A9 | P + $\theta$ | 75 | 680 | 850 | 170 | SPHERICAL $\theta$ + $\alpha$ | 2.65 | RETAINED $\gamma$ + SPHERICAL $\theta$ + M | 4.5 | 20.2 | 0.40 | 0.49 | 1.62 | 2.3 | EXAMPLE |
| A10 | P + $\theta$ | 75 | 680 | 850 | 170 | SPHERICAL $\theta$ + $\alpha$ | 2.67 | RETAINED $\gamma$ + SPHERICAL $\theta$ + M | 5.2 | 24.3 | 0.39 | 0.49 | 1.68 | 2.4 | EXAMPLE |
| A11 | P + $\theta$ | 75 | 680 | 850 | 170 | SPHERICAL $\theta$ + $\alpha$ | 2.76 | RETAINED $\gamma$ + SPHERICAL $\theta$ + M | 4.5 | 19.5 | 0.41 | 0.52 | 1.65 | 2.3 | EXAMPLE |
| A12 | P + $\theta$ | 75 | 680 | 830 | 170 | SPHERICAL $\theta$ + $\alpha$ | 2.57 | RETAINED $\gamma$ + SPHERICAL $\theta$ + M | 4.9 | 20.9 | 0.38 | 0.48 | 1.58 | 2.4 | EXAMPLE |

(continued)

| No. | HOT ROLLED WIRE ROD | METHOD FOR PRODUCING BEARING PART | | | | STEEL FOR BEARING PART | | BEARING PART | | | | | RATIO OF ROLLING CONTACT FATIGUE LIFE ($L_{10}/B1_{10}$) | RATIO OF ROLLING CONTACT FATIGUE LIFE IN CONTAMINATED ENVIRONMENT ($L_{10}/B1_{10}$) | REMARKS |
|---|---|---|---|---|---|---|---|---|---|---|---|---|---|---|---|
| | MICRO STRUCTURE | TOTAL REDUCTION OF AREA DURING WIRE DRAWING (%) | SPHEROIDIZING TEMPERATURE (°C) | QUENCHING TEMPERATURE (°C) | TEMPERING TEMPERATURE (°C) | MICRO STRUCTURE | NUMBER DENSITY OF SPHERICAL CEMENTITE ($\times 10^6$ mm$^{-2}$) | MICRO STRUCTURE | AVERAGE GRAIN SIZE OF PRIOR-AUSTENITE ($\mu$m) | AMOUNT OF RETAINED AUSTENITE (%) | AVERAGE GRAIN SIZE OF SPHERICAL CEMENTITE ($\mu$m) | NUMBER DENSITY OF SPHERICAL CEMENTITE ($\times 10^6$ mm$^{-2}$) | | | |
| A13 | P + $\theta$ | 61 | 680 | 850 | 170 | SPHERICAL $\theta$ + $\alpha$ | 2.36 | RETAINED $\gamma$ + SPHERICAL $\theta$ + M | 5.3 | 18.7 | 0.41 | 0.51 | 1.62 | 2.1 | EXAMPLE |
| A14 | P + $\theta$ | 75 | 680 | 850 | 170 | SPHERICAL $\theta$ + $\alpha$ | 2.96 | RETAINED $\gamma$ + SPHERICAL $\theta$ + M | 4.8 | 20.6 | 0.39 | 0.49 | 1.58 | 2.2 | EXAMPLE |
| A15 | P + $\theta$ | 82 | 680 | 850 | 170 | SPHERICAL $\theta$ + $\alpha$ | 2.87 | RETAINED $\gamma$ + SPHERICAL $\theta$ + M | 4.5 | 21.5 | 0.43 | 0.48 | 1.50 | 2.2 | EXAMPLE |
| A16 | P + $\theta$ | 75 | 650 | 850 | 170 | SPHERICAL $\theta$ + $\alpha$ | 3.24 | RETAINED r + SPHERICAL $\theta$ + M | 4.3 | 22.7 | 0.37 | 0.47 | 1.58 | 2.5 | EXAMPLE |

(continued)

| No. | HOT ROLLED WIRE ROD | METHOD FOR PRODUCING BEARING PART | | | | STEEL FOR BEARING PART | | BEARING PART | | | | | RATIO OF ROLLING CONTACT FATIGUE LIFE $(L_{10}/B1_{10})$ | RATIO OF ROLLING CONTACT FATIGUE LIFE IN CONTAMINATED ENVIRONMENT $(L_{10}/B1_{10})$ | RE-MARKS |
|---|---|---|---|---|---|---|---|---|---|---|---|---|---|---|---|
| | MICRO STRUCTURE | TOTAL REDUCTION OF AREA DURING WIRE DRAWING (%) | SPHEROIDIZING TEMPERATURE (°C) | QUENCHING TEMPERATURE (°C) | TEMPERING TEMPERATURE (°C) | MICRO STRUCTURE | NUMBER DENSITY OF SPHERICAL CEMENTITE ($\times 10^6$ mm$^{-2}$) | MICRO STRUCTURE | AVERAGE GRAIN SIZE OF PRIOR-AUSTENITE ($\mu$m) | AMOUNT OF RETAINED AUSTENITE (%) | AVERAGE GRAIN SIZE OF SPHERICAL CEMENTITE ($\mu$m) | NUMBER DENSITY OF SPHERICAL CEMENTITE ($\times 10^6$ mm$^{-2}$) | | | |
| A17 | P + $\theta$ | 75 | 720 | 850 | 170 | SPHERICAL $\theta$ + $\alpha$ | 2.13 | RETAINED $\gamma$ + SPHERICAL $\theta$ + M | 5.8 | 19.0 | 0.41 | 0.52 | 1.60 | 2.3 | EXAMPLE |
| A18 | P + $\theta$ | 75 | 680 | 810 | 170 | SPHERICAL $\theta$ + $\alpha$ | 2.25 | RETAINED $\gamma$ + SPHERICAL $\theta$ + M | 4.1 | 19.3 | 0.44 | 0.54 | 1.66 | 2.1 | EXAMPLE |
| A19 | P + $\theta$ | 75 | 680 | 870 | 170 | SPHERICAL $\theta$ + $\alpha$ | 2.09 | RETAINED $\gamma$ + SPHERICAL $\theta$ + M | 5.8 | 22.6 | 0.38 | 0.46 | 1.46 | 2.5 | EXAMPLE |

[Table 2-2]

TABLE 2-2

| No. | HOT ROLLED WIRE ROD | METHOD FOR PRODUCING BEARING PART | | | | STEEL FOR BEARING PART | | BEARING PART | | | | | | RATIO OF ROLLING CONTACT FATIGUE LIFE ($L_{10}/B1_{10}$) | RATIO OF ROLLING CONTACT FATIGUE LIFE IN CONTAMINATED ENVIRONMENT ($L_{10}/B1_{10}$) | REMARKS |
|---|---|---|---|---|---|---|---|---|---|---|---|---|---|---|---|---|
| | MICROSTRUCTURE | TOTAL REDUCTION OF AREA DURING WIRE DRAWING (%) | SPHEROIDIZING TEMPERATURE (°C) | QUENCHING TEMPERATURE (°C) | TEMPERING TEMPERATURE (°C) | MICROSTRUCTURE | NUMBER DENSITY OF SPHERICAL CEMENTITE ($\times 10^6$ mm$^{-2}$) | MICROSTRUCTURE | AVERAGE GRAIN SIZE OF PRIOR-AUSTENITE ($\mu$m) | AMOUNT OF RETAINED AUSTENITE (%) | AVERAGE GRAIN SIZE OF SPHERICAL CEMENTITE ($\mu$m) | NUMBER DENSITY OF SPHERICAL CEMENTITE ($\times 10^6$ mm$^{-2}$) | | | |
| A20 | P + $\theta$ | 75 | 720 | 850 | 170 | SPHERICAL $\theta$ + $\alpha$ | 1.68 | RETAINED $\gamma$ + SPHERICAL $\theta$ + M | 6.4 | 13.4 | 0.37 | 0.35 | 0.14 | 0.8 | COMPARATIVE EXAMPLE |
| A21 | P + $\theta$ | 75 | 680 | 850 | 170 | SPHERICAL $\theta$ + $\alpha$ | 3.02 | RETAINED $\gamma$ + SPHERICAL $\theta$ + M | 4.9 | 25.8 | 0.49 | 0.56 | 0.96 | 2.2 | COMPARATIVE EXAMPLE |
| A22 | P + $\theta$ | 75 | 680 | 850 | 170 | SPHERICAL $\theta$ + $\alpha$ | 2.78 | RETAINED $\gamma$ + SPHERICAL $\theta$ + M | 5.0 | 18.4 | 0.40 | 0.49 | 0.04 | 0.4 | COMPARATIVE EXAMPLE |
| A23 | P + $\theta$ + M | 44 | 680 | 850 | 170 | SPHERICAL $\theta$ + $\alpha$ | 2.14 | RETAINED $\gamma$ + SPHERICAL $\theta$ + M | 7.5 | 26.6 | 0.36 | 0.41 | 0.02 | 0.5 | COMPARATIVE EXAMPLE |

| No. | HOT ROLLED WIRE ROD MICRO-STRUC-TURE | METHOD FOR PRODUCING BEARING PART TOTAL REDUC-TION OF AREA DURING WIRE DRAW-ING (%) | SPHE-ROIDIZING TEMPERA-TURE (°C) | QUENCH-ING TEM-PERA-TURE (°C) | TEMPER-ING TEM-PERA-TURE (°C) | STEEL FOR BEARING PART MICRO STRUC-TURE | NUMBER DENSI-TY OF SPHERI-CAL CE-MENT-ITE ($\times 10^6$ mm$^{-2}$) | BEARING PART MICRO STRUC-TURE | AVER-AGE GRAIN SIZE OF PRIOR-AUSTEN ITE ($\mu$m) | AMOUN T OF RE-TAINED AUSTEN ITE (%) | AVER-AGE GRAIN SIZE OF SPHERI-CAL CE-MENT-ITE ($\mu$m) | NUMBE R DENSI-TY OF SPHERI-CAL CE-MENT-ITE ($\times 10^6$ mm$^{-2}$) | RATIO OF ROLL-ING CON-TACT FA-TIGUE LIFE ($L_{10}/B1_{10}$) | RATIO OF ROLLING CONTACT FATIGUE LIFE IN CONTAMI-NATED EN-VIRON-MENT ($L_{10}/B1_{10}$) | REMARKS |
|---|---|---|---|---|---|---|---|---|---|---|---|---|---|---|---|
| A24 | P + $\theta$ | 75 | 680 | 850 | 170 | SPHERI-CAL $\theta + \alpha$ | 2.84 | RE-TAINED $\gamma$ + SPHER-ICAL $\theta$ + M | 5.5 | 12.5 | 0.41 | 0.48 | 1.28 | 1.1 | COMPAR-ATIVE EX-AMPLE |
| A25 | P + $\theta$ | 75 | 680 | 850 | 170 | SPHERI-CAL $\theta + \alpha$ | 3.84 | RE-TAINED $\gamma$ + SPHER-ICAL $\theta$ + M | 6.3 | 25.9 | 0.31 | 0.24 | 0.72 | 2.5 | COMPAR-ATIVE EX-AMPLE |
| A26 | P + $\theta$ | 75 | 680 | 870 | 170 | SPHERI-CAL $\theta + \alpha$ | 2.78 | RE-TAINED $\gamma$ + SPHER-ICAL $\theta$ + M | 5.1 | 18.8 | 0.40 | 0.51 | 0.02 | 0.2 | COMPAR-ATIVE EX-AMPLE |
| A27 | P + $\theta$ | 75 | 680 | 870 | 170 | SPHERI-CAL $\theta + \alpha$ | 2.15 | RE-TAINED $\gamma$ + $\theta$ + M SPHERI-CAL $\gamma$ + $\theta$ + M | 4.8 | 6.7 | 0.48 | 0.61 | 1.42 | 1.2 | COMPAR-ATIVE EX-AMPLE |

| No. | HOT ROLLED WIRE ROD MICRO-STRUCTURE | METHOD FOR PRODUCING BEARING PART | | | | STEEL FOR BEARING PART | | BEARING PART | | | | | RATIO OF ROLLING CONTACT FATIGUE LIFE $(L_{10}/B1_{10})$ | RATIO OF ROLLING CONTACT FATIGUE LIFE IN CONTAMINATED ENVIRONMENT $(L_{10}/B1_{10})$ | REMARKS |
|---|---|---|---|---|---|---|---|---|---|---|---|---|---|---|---|
| | | TOTAL REDUCTION OF AREA DURING WIRE DRAWING (%) | SPHEROIDIZING TEMPERATURE (°C) | QUENCHING TEMPERATURE (°C) | TEMPERING TEMPERATURE (°C) | MICRO-STRUCTURE | NUMBER DENSITY OF SPHERICAL CEMENTITE ($\times 10^6$ mm$^{-2}$) | MICRO-STRUCTURE | AVERAGE GRAIN SIZE OF PRIOR-AUSTENITE ($\mu$m) | AMOUNT OF RETAINED AUSTENITE (%) | AVERAGE GRAIN SIZE OF SPHERICAL CEMENTITE ($\mu$m) | NUMBER DENSITY OF SPHERICAL CEMENTITE ($\times 10^6$ mm$^{-2}$) | | | |
| A28 | P + $\theta$ | 75 | 680 | 870 | 170 | SPHERICAL $\theta + \alpha$ | 2.81 | RETAINED $\gamma$ + SPHERICAL $\theta$ + M | 5.4 | 19.4 | 0.41 | 0.49 | 0.04 | 0.4 | COMPARATIVE EXAMPLE |
| A29 | P + $\theta$ | 75 | 680 | 870 | 170 | SPHERICAL $\theta + \alpha$ | 2.79 | RETAINED $\gamma$ + SPHERICAL $\theta$ + M | 4.9 | 18.9 | 0.39 | 0.51 | 0.06 | 0.8 | COMPARATIVE EXAMPLE |
| A30 | P + $\theta$ | 75 | 680 | 870 | 170 | SPHERICAL $\theta + \alpha$ | 2.76 | RETAINED $\gamma$ + SPHERICAL $\theta$ + M | 4.9 | 19.1 | 0.42 | 0.48 | 0.08 | 1.1 | COMPARATIVE EXAMPLE |
| A31 | P + $\theta$ | 75 | 680 | 870 | 170 | SPHERICAL $\theta + \alpha$ | 2.76 | RETAINED $\gamma$ + SPHERICAL $\theta$ + M | 5.7 | 19.3 | 0.38 | 0.48 | 0.02 | 0.7 | COMPARATIVE EXAMPLE |

EP 3 093 361 B1

26

| No. | HOT ROLLED WIRE ROD MICRO STRUCTURE | METHOD FOR PRODUCING BEARING PART | | | | STEEL FOR BEARING PART | | BEARING PART | | | | | | RATIO OF ROLLING CONTACT FATIGUE LIFE ($L_{10}/B1_{10}$) | RATIO OF ROLLING CONTACT FATIGUE LIFE IN CONTAMINATED ENVIRONMENT ($L_{10}/B1_{10}$) | REMARKS |
|---|---|---|---|---|---|---|---|---|---|---|---|---|---|---|---|---|
| | | TOTAL REDUCTION OF AREA DURING WIRE DRAWING (%) | SPHEROIDIZING TEMPERATURE (°C) | QUENCHING TEMPERATURE (°C) | TEMPERING TEMPERATURE (°C) | MICRO STRUCTURE | NUMBER DENSITY OF SPHERICAL CEMENTITE ($\times 10^6$ mm$^{-2}$) | MICRO STRUCTURE | AVERAGE GRAIN SIZE OF PRIOR-AUSTENITE ($\mu$m) | AMOUNT OF RETAINED AUSTENITE (%) | AVERAGE GRAIN SIZE OF SPHERICAL CEMENTITE ($\mu$m) | NUMBER DENSITY OF SPHERICAL CEMENTITE ($\times 10^6$ mm$^{-2}$) | | | | |
| A32 | P + $\theta$ | 20 | 680 | 850 | 170 | SPHERICAL $\theta$ + $\alpha$ | 1.24 | RETAINED $\gamma$ + SPHERICAL $\theta$ + M | 8.3 | 12.3 | 0.37 | 0.33 | 1.22 | 1.6 | COMPARATIVE EXAMPLE |
| A33 | P + $\theta$ | 46 | 720 | 850 | 170 | SPHERICAL $\theta$ + $\alpha$ | 1.76 | RETAINED $\gamma$ + SPHERICAL $\theta$ + M | 7.1 | 15.1 | 0.38 | 0.37 | 1.26 | 1.7 | COMPARATIVE EXAMPLE |
| A34 | P + $\theta$ S | 75 | 630 | 850 | 170 | SPHERICAL $\theta$ + $\alpha$ | 1.67 | RETAINED $\gamma$ + SPHERICAL $\theta$ + M | 7.5 | 15.4 | 0.41 | 0.31 | 1.30 | 1.9 | COMPARATIVE EXAMPLE |
| A35 | P + $\theta$ | 75 | 760 | 850 | 170 | SPHERICAL $\theta$ + $\alpha$ | 1.73 | RETAINED $\gamma$ + SPHERICAL $\theta$ + M | 7.4 | 15.5 | 0.47 | 0.42 | 1.36 | 1.8 | COMPARATIVE EXAMPLE |

| No. | HOT ROLLED WIRE ROD | METHOD FOR PRODUCING BEARING PART | | | | STEEL FOR BEARING PART | | BEARING PART | | | | | RATIO OF ROLLING CONTACT FATIGUE LIFE $(L_{10}/B1_{10})$ | RATIO OF ROLLING CONTACT FATIGUE LIFE IN CONTAMINATED ENVIRONMENT $(L_{10}/B1_{10})$ | REMARKS |
|---|---|---|---|---|---|---|---|---|---|---|---|---|---|---|---|
| | MICRO-STRUCTURE | TOTAL REDUCTION OF AREA DURING WIRE DRAWING (%) | SPHEROIDIZING TEMPERATURE (°C) | QUENCHING TEMPERATURE (°C) | TEMPERING TEMPERATURE (°C) | MICRO-STRUCTURE | NUMBER DENSITY OF SPHERICAL CEMENTITE ($\times 10^6$ mm$^{-2}$) | MICRO-STRUCTURE | AVERAGE GRAIN SIZE OF PRIOR-AUSTENITE ($\mu$m) | AMOUNT OF RETAINED AUSTENITE (%) | AVERAGE GRAIN SIZE OF SPHERICAL CEMENTITE ($\mu$m) | NUMBER DENSITY OF SPHERICAL CEMENTITE ($\times 10^6$ mm$^{-2}$) | | | |
| A36 | P + $\theta$ | 75 | 680 | 780 | 170 | SPHERICAL $\theta + \alpha$ | 2.87 | RETAINED $\gamma$ + SPHERICAL $\theta$ + M | 5.8 | 10.8 | 0.38 | 0.72 | 1.24 | 1.4 | COMPARATIVE EXAMPLE |
| A37 | P + $\theta$ | 75 | 680 | 900 | 170 | SPHERICAL $\theta + \alpha$ | 2.79 | RETAINED $\gamma$ + SPHERICAL $\theta$ + M | 7.1 | 26.5 | 0.50 | 0.33 | 0.82 | 2.2 | COMPARATIVE EXAMPLE |
| B1 | SPHERICAL $\theta + \alpha$ | 61 | 680 | 870 | 170 | SPHERICAL $\theta + \alpha$ | 1.1 | RETAINED $\gamma$ + SPHERICAL $\theta$ + M | 10.5 | 4.7 | 0.56 | 0.28 | 1.00 | 1.0 | COMPARATIVE EXAMPLE |
| B2 | SPHERICAL $\theta + \alpha$ | 61 | 680 | 830 | 170 | SPHERICAL $\theta + \alpha$ | 1.05 | RETAINED $\gamma$ + SPHERICAL $\theta$ + M | 7.4 | 18.5 | 0.49 | 0.25 | 1.06 | 2.1 | COMPARATIVE EXAMPLE |

EP 3 093 361 B1

28

The evaluation results of the microstructures of the materials, the producing method, the microstructures of the bearing parts and the rolling contact fatigue life are shown in Table 2-1 and Table 2-2. A1 to A19 are within the appropriate range of the present invention in the Table 1-1 and Table 2-1; the normal rolling contact fatigue life is 1.5 times or more of the B1, the rolling contact fatigue life in a contaminated environment is 2 times or more of the B1, and thus, A1 to A19 have an excellent rolling contact fatigue life.

All of the metallographic structures of the steels for the bearing part consisted of spherical cementite and ferrite in examples of the present invention. In addition, all of the metallographic structures of the bearing parts consisted of retained austenite, spherical cementite and martensite.

On the other hand, A20 to A38, B1 and B2 are Comparative Examples. Since Comparative Examples of A20 to A38, B1 and B2 failed to satisfy one or both of the chemical composition and microstructures of the bearing parts, which are defined by the present invention, the rolling contact fatigue life was equivalent to a conventional bearing part, or inferior to a conventional bearing part.

The chemical compositions of A20 to A31 were out of the scope of the present invention. Since the content of C was small in A20, the number density of spherical cementite in the steel for the bearing part was lowered. Therefore, since the average grain size of austenite was coarsened during quenching and the amount of retained austenite was insufficient, the rolling contact fatigue life of the bearing part in the contaminated environment was lowered. In addition, since the content of C was small, the number density of the spherical cementite in the bearing part was also insufficient. When the content of C was small, the strength during quenching was also low, and thus, the rolling contact fatigue life even under the normal conditions was lowered. On the other hand, the content of C was excessive in A21. Therefore, since the amount of retained austenite and the average grain size of the spherical cementite were excessive, the normal rolling contact fatigue life was not improved.

The content of Mn was excessive in A23. Therefore, since cracks occurred during wire drawing due to martensite of the steel for the bearing part, both the normal rolling contact fatigue life and the rolling contact fatigue life in the contaminated environment were lowered in the bearing part. Furthermore, since wire drawability was lowered, enough amount of wire drawing could not be secured. Therefore, the number density of the spherical cementite during the spheroidizing annealing was lowered. Accordingly, since sufficient pinning effect could not be ensured, the average grain size of austenite was coarsened during the quenching. In addition, since the spherical cementite of the steel for the bearing part was few, the number density of the spherical cementite in the bearing part after quenching was insufficient. In addition, since the content of Mn was excessive, the Ms point was reduced, and the amount of retained austenite was excessive. Therefore, even though martensite was not included in the microstructure and cracks did not occur, the rolling contact fatigue life was reduced. Regarding A24, the content of Mn was small and the amount of retained austenite was insufficient. Therefore, the rolling contact fatigue life of the bearing part in the contaminated environment was not improved. Regarding A25, since the content of Cr was small, the cementite was easily solid-soluted during the quenching, and the number density of the spherical cementite was insufficient. Furthermore, the amount of retained austenite was excessive, and the rolling contact fatigue life of the bearing part was lowered. Regarding A27, since the content of Cr was large and the cementite was stabilized, the cementite was not solid-soluted during the quenching, and the retained austenite was insufficient. Therefore, the rolling contact fatigue life of the bearing part in the contaminated environment was not improved.

The content of Si was excessive in A22, the content of Al was excessive in A26 and the content of O was excessive in A30. Due to inclusions, both the normal rolling contact fatigue life and the rolling contact fatigue life in the contaminated environment were inferior to those of the conventional, in A22, A26 and A30. Since the content of S was excessive in A28, both the normal rolling contact fatigue life and the rolling contact fatigue life in the contaminated environment were inferior to those of the conventional due to sulfide. Since the content of N was excessive in A31, both the normal rolling contact fatigue life and the rolling contact fatigue life in the contaminated environment were inferior to those of the conventional due to nitride. Since the content of P was excessive in A29, grain boundary was embrittled. Therefore, both the normal rolling contact fatigue life and the rolling contact fatigue life in the contaminated environment were lowered in A29.

Although the chemical compositions of A32 to A38 were within the scope of the present invention, the microstructures of the bearing part were out of the scope of the present invention. Regarding A32 and A33, since the total reduction of area of the wire drawing is low, part of the pearlite structure was not spheroidized during the spheroidizing annealing and the number density of the spherical cementite in the steel for the bearing part was decreased. Therefore, since the average grain size of austenite was coarsened during the quenching, the amount of retained austenite was insufficient. Then, the number density of the spherical cementite in the bearing part was also decreased, and the rolling contact fatigue life in the contaminated environment was insufficient.

Regarding A34, since the heating temperature during the spheroidizing annealing was low, part of the pearlite structure was not spheroidized during the spheroidizing annealing and the number density of the spherical cementite in the steel for the bearing part was lowered. Therefore, since the average grain size of austenite was coarsened during the quenching, the amount of retained austenite of the bearing part was decreased. Furthermore, the number density of the spherical cementite in the bearing part was also decreased, and the rolling contact fatigue life in the contaminated environment was insufficient. Regarding A35, since the temperature during the spheroidizing annealing was high, the number density of the spherical cementite in the steel for the bearing part was decreased. As a result, since the average grain size of austenite was coarsened during the quenching, the amount of retained austenite was decreased. Furthermore, since the number density of the spherical cementite in the bearing part was decreased, the rolling contact fatigue life in the contaminated environment was insufficient.

Regarding A36, since the heating temperature during quenching was low, the amount of solid-soluted C was decreased and the amount of retained austenite was insufficient. Therefore, the rolling contact fatigue life in the contaminated environment was insufficient. Regarding A37, since the heating temperature of quenching was high and the cementite was excessively solid-soluted, the amount of retained austenite was excessive and the number density of the spherical cementite was also decreased. Therefore, normal rolling contact fatigue life was decreased.

B1 and B2 are the current materials in which the spheroidizing annealing was performed before the wire drawing. In the B1, the number density of the spherical cementite in the steel for the bearing part was small. Therefore, the average grain size of austenite was coarsened during the quenching and the amount of retained austenite was decreased. As a result, the number density of the spherical cementite in the bearing part was lowered. Then, in the B1, the rolling contact fatigue life in the contaminated environment was low. In addition, since the content of Mn is increased in B2, the amount of retained austenite was increased compared with the B1. However, since the number density of the spherical cementite in the bearing part was small, the normal rolling contact fatigue property was insufficient.

[Industrial Applicability]

According to the above aspects of the present invention, a bearing part can be obtained by suppressing the content of Mn and by shortening spheroidizing annealing in order to secure good wire drawability. As a result, since the bearing part having an excellent rolling contact fatigue life in an environment including a contaminated environment can be obtained, the present invention is highly applicable to industries.

[Brief Description of the Reference Symbols]

1    Martensite
2    Spherical cementite
4    Ferrite
5    Spherical cementite

**Claims**

1. A bearing part comprising, as a chemical composition, by mass%,
C: 0.95% to 1.10%;
Si: 0.10% to 0.70%;
Mn: 0.20% to 1.20%;
Cr: 0.90% to 1.60%;
Al: 0.010% to 0.100%;
N: 0.003% to 0.030%;
P: 0.025% or less;
S: 0.025% or less;
O: 0.0010% or less; and optionally one or more elements from the group consisting of:

   Mo: 0.25% or less,
   B: 0.0050% or less,
   Cu: 1.0% or less,
   Ni: 3.0% or less, and
   Ca: 0.0015% or less; and
   a remainder including Fe and impurities;
   wherein a metallographic structure consists of a retained austenite, a spherical cementite and a martensite;
   wherein an amount of the retained austenite is 18% to 25%, by volume%;
   wherein an average grain size of a prior-austenite is 6.0 $\mu$m or less;

wherein an average grain size of the spherical cementite is 0.45 $\mu$m or less; and

wherein a number density of the spherical cementite is $0.45 \times 10^6$ mm$^{-2}$ or more in the metallographic structure.

2.  The bearing part according to claim 1 comprising, as the chemical composition, by mass%, one or more elements from the group consisting of:

    Mo: 0.01% to 0.25%,
    B: 0.0001% to 0.0050%,
    Cu: 0.1% to 1.0%,
    Ni: 0.05% to 3.0%, and
    Ca: 0.0003% to 0.0015%.

3.  A steel for a bearing part comprising, as a chemical composition, by mass%,
    C: 0.95% to 1.10%;
    Si: 0.10% to 0.70%;
    Mn: 0.20% to 1.20%;
    Cr: 0.90% to 1.60%;
    Al: 0.010% to 0.100%;
    N: 0.003% to 0.030%;
    S: 0.025% or less;
    P: 0.025% or less;
    O: 0.0010% or less;
    optionally one or more elements from the group consisting of:

    Mo: 0.25% or less,
    B: 0.0050% or less,
    Cu: 1.0% or less,
    Ni: 3.0% or less, and
    Ca: 0.0015% or less; and
    a remainder including Fe and impurities;
    wherein a metallographic structure consists of a spherical cementite and a ferrite;
    wherein a number density of the spherical cementite having a grain size of 0.5 $\mu$m to 3.0 $\mu$m is $2.0 \times 10^6$ mm$^{-2}$ or more in the metallographic structure.

4.  The steel for the bearing part according to claim 3 comprising, as the chemical composition, by mass%, one or more elements from the group consisting of:

    Mo: 0.01% to 0.25%,
    B: 0.0001% to 0.0050%,
    Cu: 0.1% to 1.0%,
    Ni: 0.05% to 3.0%, and
    Ca: 0.0003% to 0.0015%.

5.  A method for producing a steel for a bearing part according to claim 3, the method comprising, a casting process for obtaining a steel piece having a chemical composition according to claim 3 or 4;
    a heating process of heating the steel piece to 900°C to 1300°C;
    a hot rolling process for obtaining a hot rolled wire rod by subjecting the steel piece to hot rolling at a finish rolling temperature of 850°C or less after the heating process;
    a winding process of winding the hot rolled wire rod after the hot rolling process at a winding temperature of 800°C or less;
    a cooling process for making a metallographic structure of the hot rolled wire rod a pearlite by cooling the hot rolled wire rod to 600°C at a cooling rate of 3.0 °C/second or less after the winding process;
    a wire drawing process of subjecting the hot rolled wire rod to wire drawing in which a total reduction of an area is 50% or more after the cooling process; and
    a spheroidizing annealing process for obtaining the steel for the bearing part by performing a spheroidizing annealing in which the hot rolled wire rod after the wire drawing process is held at a temperature of 650°C to the lower of 750°C and A$_1$-5°C for 0.5 hours to 5 hours;
    wherein, A$_1$ represents a temperature at which A$_1$ transformation starts, and is a predicted value which is calculated by a following equation 1 based on the chemical composition,

and, [C], [Si], [Mn], [Cu], [Ni], [Cr], [Mo], [Al] and [B] in the equation 1 represent, by mass%, the content of C, the content of Si, the content of Mn, the content of Cu, the content of Ni, the content of Cr, the content of Mo, the content of Al and the content of B, respectively, in the hot rolled wire rod,

$$A_1=750.8-26.6\times[C]+17.6\times[Si]-11.6\times[Mn]-22.9\times[Cu]-$$
$$23.0\times[Ni]+24.1\times[Cr]+22.5\times[Mo]-169.4\times[Al]-894.7\times[B] \quad (\text{Equation 1}).$$

6. A method for producing a bearing part according to claim 1, the method comprising,

a casting process for obtaining a steel piece having a chemical composition according to claim 1 or 2;

a heating process of heating the steel piece to 900°C to 1300°C;

a hot rolling process for obtaining a hot rolled wire rod by subjecting the steel piece to hot rolling at a finish rolling temperature of 850°C or less after the heating process;

a winding process of winding the hot rolled wire rod after the hot rolling process at a winding temperature of 800°C or less;

a cooling process for making a metallographic structure of the hot rolled wire rod a pearlite by cooling the hot rolled wire rod to 600°C at a cooling rate of 3.0 °C/second or less after the winding process;

a wire drawing process of subjecting the hot rolled wire rod to wire drawing in which a total reduction of an area is 50% or more after the cooling process;

a spheroidizing annealing process for obtaining a steel for a bearing part by performing spheroidizing annealing in which the hot rolled wire rod after the wire drawing process is held at a temperature of 650°C to the lower of 750°C and $A_1$-5°C for 0.5 hours to 5 hours;

a forming process of rough forming the steel for the bearing part after the spheroidizing annealing process;

a quenching process of performing quenching by heating the steel for the bearing part after the forming process to 800°C to 890°C;

a tempering process of subjecting the steel for the bearing part to tempering at 250°C or less after the quenching process; and

a finish machining process for obtaining the bearing part by subjecting the steel for the bearing part to finish machining after the tempering process;

wherein, $A_1$ represents a temperature at which $A_1$ transformation starts, and is a predicted value which is calculated by a following equation 2 based on the chemical composition,

and, [C], [Si], [Mn], [Cu], [Ni], [Cr], [Mo], [Al] and [B] in the equation 2 represent, by mass%, the content of C, the content of Si, the content of Mn, the content of Cu, the content of Ni, the content of Cr, the content of Mo, the content of Al and the content of B, respectively, in the hot rolled wire rod,

$$A_1=750.8-26.6\times[C]+17.6\times[Si]-11.6\times[Mn]-22.9\times[Cu]-$$
$$23.0\times[Ni]+24.1\times[Cr]+22.5\times[Mo]-169.4\times[Al]-894.7\times[B] \quad (\text{Equation 2}).$$

**Patentansprüche**

1. Ein Lagerteil, umfassend, als eine chemische Zusammensetzung, in Massen-%,

C: 0,95% bis 1,10%;
Si: 0,10% bis 0,70%;
Mn: 0,20% bis 1,20%;
Cr: 0,90% bis 1,60%;
Al: 0,010% bis 0,100%;
N: 0,003% bis 0,030%;
P: 0,025% oder weniger;
S: 0,025% oder weniger;
O: 0,0010% oder weniger; und
gegebenenfalls ein oder mehrere Elemente aus der Gruppe, bestehend aus:

Mo: 0,25% oder weniger,
B: 0,0050% oder weniger,

Cu: 1,0% oder weniger,
Ni: 3,0% oder weniger und
Ca: 0,0015% oder weniger; und
einen Rest, der Fe und Verunreinigungen beinhaltet;
wobei eine metallographische Struktur aus einem Restaustenit, einem sphärischen Zementit und einem Martensit besteht;
wobei eine Menge des Restaustenits 18% bis 25%, in Volumen-%, beträgt;
wobei eine mittlere Korngröße eines vorherigen Austenits 6,0 $\mu$m oder weniger beträgt;
wobei eine mittlere Korngröße des sphärischen Zementits 0,45 $\mu$m oder weniger beträgt; und
wobei eine Zahlendichte des sphärischen Zementits 0,45 x $10^6$ mm$^{-2}$ oder mehr in der metallographischen Struktur beträgt.

2. Das Lagerteil nach Anspruch 1, umfassend, als die chemische Zusammensetzung, in Massen-%, ein oder mehrere Elemente aus der Gruppe, bestehend aus:

Mo: 0,01% bis 0,25%,
B: 0,0001% bis 0,0050%,
Cu: 0,1% bis 1,0%,
Ni: 0,05% bis 3,0% und
Ca: 0,0003% bis 0,0015%.

3. Ein Stahl für ein Lagerteil, umfassend, als eine chemische Zusammensetzung, in Massen-%,
C: 0,95% bis 1,10%;
Si: 0,10% bis 0,70%;
Mn: 0,20% bis 1,20%;
Cr: 0,90% bis 1,60%;
Al: 0,010% bis 0,100%;
N: 0,003% bis 0,030%;
S: 0,025% oder weniger;
P: 0,025% oder weniger;
O: 0,0010% oder weniger;
gegebenenfalls ein oder mehrere Elemente aus der Gruppe, bestehend aus:

Mo: 0,25% oder weniger,
B: 0,0050% oder weniger,
Cu: 1,0% oder weniger,
Ni: 3,0% oder weniger und
Ca: 0,0015% oder weniger; und
einen Rest, der Fe und Verunreinigungen beinhaltet;
wobei eine metallographische Struktur aus einem sphärischen Zementit und einem Ferrit besteht;
wobei eine Zahlendichte des sphärischen Zementits mit einer Korngröße von 0,5 $\mu$m bis 3,0 $\mu$m 2,0 x $10^6$ mm$^{-2}$ oder mehr in der metallographischen Struktur beträgt.

4. Der Stahl für das Lagerteil nach Anspruch 3, umfassend, als die chemische Zusammensetzung, in Massen-%, ein oder mehrere Elemente aus der Gruppe, bestehend aus:

Mo: 0,01% bis 0,25%,
B: 0,0001% bis 0,0050%,
Cu: 0,1 % bis 1,0%,
Ni: 0,05% bis 3,0% und
Ca: 0,0003% bis 0,0015%.

5. Ein Verfahren zur Herstellung eines Stahls für ein Lagerteil nach Anspruch 3, wobei das Verfahren umfasst
ein Gießverfahren zum Erhalt eines Stahlstücks mit einer chemischen Zusammensetzung nach Anspruch 3 oder 4;
ein Erwärmungsverfahren des Erwärmens des Stahlstücks auf 900°C bis 1300°C;
ein Warmwalzverfahren zum Erhalt eines warmgewalzten Walzdrahts durch Unterziehen des Stahlstücks einem Warmwalzen bei einer Endwalztemperatur von 850°C oder weniger nach dem Erwärmungsverfahren;
ein Aufwickelverfahren des Aufwickelns des warmgewalzten Walzdrahts nach dem Warmwalzverfahren bei einer Aufwickeltemperatur von 800°C oder weniger;

ein Abkühlverfahren, um aus einer metallografischen Struktur des warmgewalzten Walzdrahts durch Abkühlen des warmgewalzten Walzdrahts auf 600°C bei einer Abkühlgeschwindigkeit von 3,0°C/Sekunde oder weniger nach dem Aufwickelverfahren ein Perlit zu machen;

ein Drahtziehverfahren des Unterziehens des warmgewalzten Walzdrahts einem Drahtziehen, wobei eine Gesamtreduktion einer Fläche nach dem Abkühlverfahren 50% oder mehr beträgt; und

ein sphäroidisierendes Glühverfahren zum Erhalt des Stahls für das Lagerteil durch Durchführen eines sphäroidisierenden Glühens, bei dem der warmgewalzte Walzdraht nach dem Drahtziehverfahren bei einer Temperatur von 650°C bis weniger als 750°C und $A_1$-5°C für 0,5 Stunden bis 5 Stunden gehalten wird;

wobei $A_1$ eine Temperatur darstellt, bei der $A_1$-Umwandlung beginnt, und ein prognostizierter Wert ist, der anhand einer nachstehenden Gleichung 1, bezogen auf die chemische Zusammensetzung, berechnet wird,

und [C], [Si], [Mn], [Cu], [Ni], [Cr], [Mo], [Al] and [B] in der Gleichung 1 in Massen-% den Gehalt an C, den Gehalt an Si, den Gehalt an Mn, den Gehalt an Cu, den Gehalt an Ni, den Gehalt an Cr, den Gehalt an Mo, den Gehalt an Al bzw. den Gehalt an B in dem warmgewalzten Walzdraht darstellen,

$$A_1 = 750,8-26,6\times[C]+17,6\times[Si]-11,6\times[Mn]-22,9\times[Cu]-$$
$$23,0\times[Ni]+24,1\times[Cr]+22,5\times[Mo]-169,4\times[Al]-894,7\times[B] \quad \text{(Gleichung 1)}.$$

6. Ein Verfahren zur Herstellung eines Lagerteils nach Anspruch 1, wobei das Verfahren umfasst

ein Gießverfahren zum Erhalt eines Stahlstücks mit einer chemischen Zusammensetzung nach Anspruch 1 oder 2;

ein Erwärmungsverfahren des Erwärmens des Stahlstücks auf 900°C bis 1300°C;

ein Warmwalzverfahren zum Erhalt eines warmgewalzten Walzdrahts durch Unterziehen des Stahlstücks einem Warmwalzen bei einer Endwalztemperatur von 850°C oder weniger nach dem Erwärmungsverfahren;

ein Aufwickelverfahren des Aufwickelns des warmgewalzten Walzdrahts nach dem Warmwalzverfahren bei einer Aufwickeltemperatur von 800°C oder weniger;

ein Abkühlverfahren, um aus einer metallografischen Struktur des warmgewalzten Walzdrahts durch Abkühlen des warmgewalzten Walzdrahts auf 600°C bei einer Abkühlgeschwindigkeit von 3,0°C/Sekunde oder weniger nach dem Aufwickelverfahren ein Perlit zu machen;

ein Drahtziehverfahren des Unterziehens des warmgewalzten Walzdrahts einem Drahtziehen, bei dem eine Gesamtreduktion einer Fläche nach dem Abkühlverfahren 50% oder mehr beträgt;

ein sphäroidisierendes Glühverfahren zum Erhalt eines Stahls für ein Lagerteil durch Durchführen eines sphäroidisierenden Glühens, bei dem der warmgewalzte Walzdraht nach dem Drahtziehverfahren bei einer Temperatur von 650°C bis weniger als 750°C und $A_1$-5°C für 0,5 Stunden bis 5 Stunden gehalten wird;

ein Formgebungsverfahren des Grobformens des Stahls für das Lagerteil nach dem sphäroidisierenden Glühverfahren;

ein Quenchverfahren des Durchführens eines Quenchens durch Erwärmen des Stahls für das Lagerteil nach dem Formgebungsverfahren auf 800°C bis 890°C;

ein Temperverfahren des Unterziehens des Stahls für das Lagerteil einem Tempern bei 250°C oder weniger nach dem Quenchverfahren; und

ein Fertigbearbeitungsverfahren zum Erhalt des Lagerteils durch Unterziehen des Stahls für das Lagerteil einer Fertigbearbeitung nach dem Temperverfahren;

wobei $A_1$ eine Temperatur darstellt, bei der $A_1$-Umwandlung beginnt, und ein prognostizierter Wert ist, der anhand einer nachstehenden Gleichung 2, bezogen auf die chemische Zusammensetzung, berechnet wird,

und [C], [Si], [Mn], [Cu], [Ni], [Cr], [Mo], [Al] and [B] in der Gleichung 2 in Massen-% den Gehalt an C, den Gehalt an Si, den Gehalt an Mn, den Gehalt an Cu, den Gehalt an Ni, den Gehalt an Cr, den Gehalt an Mo, den Gehalt an Al bzw. den Gehalt an B in dem warmgewalzten Walzdraht darstellen,

$$A_1 = 750,8-26,6\times[C]+17,6\times[Si]-11,6\times[Mn]-22,9\times[Cu]-$$
$$23,0\times[Ni]+24,1\times[Cr]+22,5\times[Mo]-169,4\times[Al]-894,7\times[B] \quad \text{(Gleichung 2)}.$$

**Revendications**

1. Pièce de palier comprenant, comme une composition chimique, en % en masse,

C : 0,95 % à 1,10 % ;
Si : 0,10 % à 0,70 % ;
Mn : 0,20 % à 1,20 % ;
Cr : 0,90 % à 1,60 % ;
Al : 0,010 % à 0,100 % ;
N : 0,003 % à 0,030 % ;
P : 0,025 % ou inférieur ;
S : 0,025 % ou inférieur ;
O : 0,0010 % ou inférieur ; et
éventuellement un ou plusieurs éléments du groupe consistant en :

Mo : 0,25 % ou inférieur,
B : 0,0050 % ou inférieur,
Cu : 1,0 % ou inférieur,
Ni: 3,0 % ou inférieur, et
Ca : 0,0015 % ou inférieur ; et
un reste incluant Fe et des impuretés ;
dans laquelle une structure métallographique consistant en une austénite résiduelle, une cémentite sphérique et une martensite ;
dans laquelle une quantité de l'austénite résiduelle est de 18 % à 25 %, en % en volume ;
dans laquelle une taille moyenne de grain d'une austénite préalable est de 6,0 $\mu$m ou inférieur ;
dans laquelle une taille moyenne de grain de la cémentite sphérique est de 0,45 $\mu$m ou inférieure ; et
dans laquelle une densité en nombre de la cémentite sphérique est de 0,45 x $10^6$ mm$^{-2}$ ou supérieure dans la structure métallographique.

2. Pièce de palier selon la revendication 1 comprenant, comme la composition chimique, en % en masse, un ou plusieurs éléments du groupe consistant en :

Mo : 0,01 % à 0,25 %,
B : 0,0001 % à 0,0050 %,
Cu : 0,1 % à 1,0 %,
Ni : 0,05 % à 3,0 %, et
Ca : 0,0003 % à 0,0015 %.

3. Acier pour une pièce de palier comprenant, comme une composition chimique, en % en masse,
C : 0,95 % à 1,10 % ;
Si : 0,10 % à 0,70 % ;
Mn : 0,20 % à 1,20 % ;
Cr : 0,90 % à 1,60 % ;
Al : 0,010 % à 0,100 % ;
N : 0,003 % à 0,030 % ;
S : 0,025 % ou inférieur ;
P : 0,025 % ou inférieur ;
O : 0,0010 % ou inférieur ;
éventuellement un ou plusieurs éléments du groupe consistant en :

Mo : 0,25 % ou inférieur,
B : 0,0050 % ou inférieur,
Cu : 1,0 % ou inférieur,
Ni: 3,0 % ou inférieur, et
Ca : 0,0015 % ou inférieur ; et
un reste incluant Fe et des impuretés ;
dans lequel une structure métallographique consiste en une cémentite sphérique et une ferrite ;
dans lequel une densité en nombre de la cémentite sphérique ayant une taille de grain de 0,5 $\mu$m à 3,0 $\mu$m est de 2,0 x $10^6$ mm$^{-2}$ ou supérieure dans la structure métallographique.

4. Acier pour la pièce de palier selon la revendication 3, comprenant, comme la composition chimique, en % en masse, un ou plusieurs éléments du groupe consistant en :

Mo : 0,01 % à 0,25 %,
B : 0,0001 % à 0,0050 %,
Cu : 0,1 % à 1,0 %,
Ni : 0,05 % à 3,0 %, et
Ca : 0,0003 % à 0,0015 %.

**5.** Procédé de production d'un acier pour une pièce de palier selon la revendication 3, le procédé comprenant,
un procédé de coulée pour l'obtention d'une pièce en acier ayant une composition chimique selon la revendication 3 ou 4 ;
un procédé de chauffage chauffant la pièce en acier à de 900°C à 1 300°C ;
un procédé de laminage à chaud pour obtenir un fil machine laminé à chaud en soumettant la pièce en acier à un laminage à chaud à une température de laminage de finition de 850°C ou inférieure après le procédé de chauffage ;
un procédé d'enroulement enroulant le fil machine laminé à chaud après le procédé de laminage à chaud à une température d'enroulement de 800°C ou inférieure ;
un procédé de refroidissement pour faire d'une structure métallographique du fil machine laminé à chaud une perlite par refroidissement du fil machine laminé à chaud à 600°C à une vitesse de refroidissement de 3,0°C/seconde ou inférieure après le procédé d'enroulement ;
un procédé d'étirage de fil soumettant le fil machine laminé à chaud à un étirage de fil dans lequel une réduction totale d'une surface est de 50 % ou supérieure après le procédé de refroidissement ; et
un procédé de recuit de sphéroïdisation pour obtenir l'acier pour la pièce de palier en réalisant un recuit de sphéroïdisation dans lequel le fil machine laminé à chaud après le procédé d'étirage de fil est maintenu à une température de 650°C jusqu'à la plus basse de 750°C et $A_1$-5°C pendant de 0,5 heure à 5 heures ;
dans lequel, $A_1$ représente une température à laquelle la transformation $A_1$ démarre, et est une valeur prédite qui est calculée par une équation 1 suivante sur la base de la composition chimique,
et, [C], [Si], [Mn], [Cu], [Ni], [Cr], [Mo], [Al] et [B] dans l'équation 1 représentent, en % en masse, la teneur en C, la teneur en Si, la teneur en Mn, la teneur en Cu, la teneur en Ni, la teneur en Cr, la teneur en Mo, la teneur en Al et la teneur en B, respectivement, dans le fil machine laminé à chaud,

$$A_1 = 750,8 - 26,6 \times [C] + 17,6 \times [Si] - 11,6 \times [Mn] - 22,9 \times [Cu] - 23,0 \times [Ni] + 24,1 \times [Cr] + 22,5 \times [Mo] - 169,4 \times [Al] - 894,7 \times [B] \quad \text{(Equation 1)}.$$

**6.** Procédé de production d'une pièce de palier selon la revendication 1, le procédé comprenant,
un procédé de coulée pour l'obtention d'une pièce en acier ayant une composition chimique selon la revendication 1 ou 2 ;
un procédé de chauffage chauffant la pièce en acier à de 900°C à 1 300°C ;
un procédé de laminage à chaud pour obtenir un fil machine laminé à chaud en soumettant la pièce en acier à un laminage à chaud à une température de laminage de finition de 850°C ou inférieure après le procédé de chauffage ;
un procédé d'enroulement enroulant le fil machine laminé à chaud après le procédé de laminage à chaud à une température d'enroulement de 800°C ou inférieure ;
un procédé de refroidissement pour faire d'une structure métallographique du fil machine laminé à chaud une perlite par refroidissement du fil machine laminé à chaud à 600°C à une vitesse de refroidissement de 3,0°C/seconde ou inférieure après le procédé d'enroulement ;
un procédé d'étirage de fil soumettant le fil machine laminé à chaud à un étirage de fil dans lequel une réduction totale d'une surface est de 50 % ou supérieure après le procédé de refroidissement ;
un procédé de recuit de sphéroïdisation pour obtenir un acier pour une pièce de palier en réalisant un recuit de sphéroïdisation dans lequel le fil machine laminé à chaud après le procédé d'étirage de fil est maintenu à une température de 650°C jusqu'à la plus basse de 750°C et $A_1$-5°C pendant de 0,5 heure à 5 heures ;
un procédé de façonnage façonnant grossièrement l'acier pour la pièce de palier après le procédé de recuit de sphéroïdisation ;
un procédé de trempe réalisant une trempe par chauffage de l'acier pour la pièce de palier après le procédé de façonnage à de 800°C à 890°C ;
un procédé de revenu soumettant l'acier pour la pièce de palier à un revenu à 250°C ou inférieur après le procédé de trempe ; et
un procédé d'usinage de finition pour obtenir la pièce de palier en soumettant l'acier pour la pièce de palier à un usinage de finition après le procédé de revenu ;
dans lequel, $A_1$ représente une température à laquelle la transformation $A_1$ démarre, et est une valeur prédite qui est calculée par une équation 2 suivante sur la base de la composition chimique,

et, [C], [Si], [Mn], [Cu], [Ni], [Cr], [Mo], [Al] et [B] dans l'équation 2 représentent, en % en masse, la teneur en C, la teneur en Si, la teneur en Mn, la teneur en Cu, la teneur en Ni, la teneur en Cr, la teneur en Mo, la teneur en Al et la teneur en B, respectivement, dans le fil machine laminé à chaud,

$$A_1 = 750,8-26,6\times[C]+17,6\times[Si]-11,6\times[Mn]-22,9\times[Cu]-23,0\times[Ni]+24,1\times[Cr]+22,5\times[Mo]-169,4\times[Al]-894,7\times[B] \quad \text{(Equation 2)}.$$

FIG. 1

FIG. 2

FIG. 3

# FIG. 4

AMOUNT OF RETAINED AUSTENITE OF BEARING PART (%)

AVERAGE GRAIN SIZE OF PRIOR-AUSTENITE OF BEARING PART ($\mu$m)

◇ EXAMPLE
▨ COMPARATIVE EXAMPLE

FIG. 5

AMOUNT OF RETAINED AUSTENITE OF BEARING PART (%)

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014003338 A
- JP 2014084952 A
- JP 2004124215 A
- JP 2007077432 A
- WO 2013108828 A
- JP 2004100016 A